# EUROPÄISCHE PATENTSCHRIFT

(11) **EP 3 853 831 B1**
(45) Veröffentlichungstag und Bekanntmachung des Hinweises auf die Patenterteilung: **24.01.2024**
(21) Anmeldenummer: 19758700.9
(22) Anmeldetag: 22.08.2019
(51) Int. Cl.: G08G 1/00, B60W 30/18, B60W 60/00, B60W 50/00

(54) **VERFAHREN ZUM KOORDINIEREN EINES FAHRZEUGVERBUNDES, AUSWERTEEINHEIT, FAHRZEUG SOWIE FAHRZEUGVERBUND**
METHOD FOR COORDINATING A VEHICLE GROUP, EVALUATION UNIT, VEHICLE AND VEHICLE GROUP
PROCÉDÉ DE COORDINATION D'UN PELOTON DE VÉHICULES, UNITÉ D'ÉVALUATION, VÉHICULE ET PELOTON DE VÉHICULES

(30) Priorität: 18.09.2018 DE 102018122825
(43) Veröffentlichungstag der Anmeldung: 28.07.2021
(73) Patentinhaber: ZF CV Systems Europe BV, 1170 Brussels (BE)
(72) Erfinder: BAUM, Mathias, 30455 Hannover (DE)
(74) Vertreter: Rabe, Dirk-Heinrich
(86) Internationale Anmeldenummer: PCT/EP2019/072420
(87) Internationale Veröffentlichungsnummer: WO 2020/057887

(56) Entgegenhaltungen:
- DE-A1-102009 015 170
- DE-A1-102017 000 646
- JP-A- 2016 146 131

## Beschreibung

Die Erfindung betrifft ein Verfahren zum Koordinieren eines Fahrzeugverbundes aus mehreren Fahrzeugen, insbesondere Nutzfahrzeugen, eine Auswerteeinheit zur Durchführung des Verfahrens sowie ein Fahrzeug, insbesondere Leitfahrzeug, sowie einen Fahrzeugverbund mit einem derartigen Fahrzeug bzw. Leitfahrzeug.

Es ist bekannt, dass sich mehrere Fahrzeuge aufeinander abgestimmt auf einer Fahrbahn in kurzen Verbund-Folgeabständen hintereinander bewegen können, um durch einen verringerten Luftwiderstand Kraftstoff zu sparen. Derartig abgestimmte Fahrzeuge werden auch als Fahrzeugverbund, Fahrzeugverband, Fahrzeugzug, Fahrzeugkonvoi oder Platoon bezeichnet. Bei einer solchen abgestimmten Fahrt kann der heute übliche Sicherheitsabstand zwischen den einzelnen Fahrzeugen unterschritten werden, wenn sich die Fahrzeuge untereinander beispielsweise über eine drahtlose V2X-Kommunikation koordinieren. Koordiniert werden die einzelnen Fahrzeuge des Fahrzeugverbundes dabei beispielsweise von einem Leitfahrzeug, das über die drahtlose V2X-Kommunikation mit den anderen Fahrzeugen kommunizieren und Daten, insbesondere fahrdynamische Eigenschaften der jeweiligen Fahrzeuge, austauschen kann. Ferner können auch Informationen über die Umgebung inklusive der umgebenden Verkehrsteilnehmer ausgetauscht werden. Das Leitfahrzeug kann dabei insbesondere einen SollAbstand vorgeben, der von den einzelnen Fahrzeugen des Fahrzeugverbundes dann über ein Abstandsregelsystem eingestellt wird. Dadurch kann gewährleistet werden, dass die einzelnen Fahrzeuge des Fahrzeugverbundes schneller aufeinander reagieren können, wodurch eine Beeinträchtigung der Sicherheit vermieden und somit das Unterschreiten des Sicherheitsabstandes gerechtfertigt werden kann, da die Reaktionszeiten verkürzt werden.

Ist ein derartiger Fahrzeugverbund auf beispielsweise einer mehrspurigen Straße, z.B. einem Highway/Autobahn unterwegs, stellt der Fahrzeugverbund durch die aufeinander abgestimmte Einstellung der Fahrdynamik zum Einhalten des vorgegebenen Soll-Abstandes ein sehr langes Hindernis für die Fahrzeuge dar, die die Fahrbahn des Fahrzeugverbundes passieren wollen. Dieses Hindernis, das eine Ausdehnung in Fahrtrichtung des Fahrzeugverbundes von mehreren Fahrzeugen aufweist, kann von einem Fahrzeug, das sich beispielsweise auf der benachbarten Fahrbahn befindet, nur schwer in Querrichtung überwunden werden. Dies kann beispielsweise dann nötig sein, wenn das auf der benachbarten Fahrbahn befindliche Fahrzeug von der Autobahn auf eine Ausfahrt abfahren möchte und dazu ein Spurwechsel über die vom Fahrzeugverbund besetzte Fahrbahn durchführen muss. Das jeweilige Fahrzeug muss somit entweder stark abbremsen, um hinter dem letzten Fahrzeug des Fahrzeugverbundes die Spur wechseln zu können, oder so stark beschleunigen, dass es vor dem ersten Fahrzeug des Fahrzeugverbundes einen Spurwechsel zur Ausfahrt durchführen kann. Ein derartiges Abbremsen oder Beschleunigen des Fahrzeuges um ans Ende bzw. an den Anfang des Fahrzeugverbundes zu gelangen, ist jedoch nicht in jeder Verkehrssituation möglich und birgt zudem gewisse Gefahren für den nachfolgenden Verkehr sowie für das jeweilige Fahrzeug selbst.

Derselbe Nachteil ergibt sich für ein Fahrzeug, das sich auf einer Auffahrt der Autobahn befindet und das zu dem Zeitpunkt auf die Fahrspur des Fahrzeugverbundes wechselt, zu dem sich auch der Fahrzeugverbund an dieser Stelle befindet. Auch das auffahrende Fahrzeug hat nur dann eine Chance, auf die Autobahn aufzufahren, wenn es derartig beschleunigt, dass es vor dem ersten Fahrzeug des Fahrzeugverbundes auf die Fahrbahn des Fahrzeugverbundes gelangt oder aber derartig abbremst, dass es nach dem letzten Fahrzeug des Fahrzeugverbundes auf diese Fahrbahn gelangt. Dies kann unter Umständen dazu führen, dass das auffahrende Fahrzeug in den Stillstand abbremst, was nachteiligerweise zur Folge hat, dass es zum Auffahren auf die Autobahn aus dem Stand beschleunigen muss. Beide Möglichkeiten des Auffahrens auf die Autobahn sind somit für das auffahrende Fahrzeug und auch den umliegenden Verkehr sicherheitsbedenklich.

Um diesem Umstand Rechnung zu tragen, kann vorgesehen sein, dass der Fahrzeugverbund gesteuert bzw. koordiniert von dem Leitfahrzeug des Fahrzeugverbundes, beispielsweise dem ersten Fahrzeug des Fahrzeugverbundes, an Auffahrten bzw. Ausfahrten der Autobahn automatisch aufgelöst wird, so dass die üblichen Sicherheitsabstände zwischen den Fahrzeugen wieder eingestellt werden. Jedes Fahrzeug bewegt sich dann unkoordiniert gesteuert von seinem jeweiligen Fahrer. Dieser kann dann anhand seiner Beobachtungen sein Fahrzeug entsprechend abbremsen, um dem auffahrenden bzw. abfahrenden Fahrzeug einen Spurwechsel zu ermöglichen. Weiterhin kann vorgesehen sein, dass der Fahrer eines beliebigen Fahrzeuges im Fahrzeugverbund manuell eine Bremsung veranlasst, wenn er ein auffahrendes bzw. abfahrendes Fahrzeug erkennt. Dadurch kann der Fahrzeugverbund an einer beliebigen Stelle manuell geöffnet werden, um dem auffahrenden bzw. abfahrenden Fahrzeug einen Spurwechsel zu ermöglichen.

Nachteilig bei diesen genannten Methoden ist, dass der Fahrzeugverbund zumindest zeitweise nicht koordiniert wird und dadurch die Vorteile eines Fahrzeugverbundes bzw. Platoons nicht mehr gewährleistet werden können. Zudem muss der Fahrzeugverbund nach einer derartigen Verkehrssituation, die ein Auflösen des Fahrzeugverbundes bewirkt, wieder entsprechend aufgebaut und dazu aufeinander abgestimmt werden, was einen erhöhten Regelungsaufwand zur Folge hat.

Eine weitere Lösung sieht vor, dass die Anzahl der Fahrzeuge in einem Fahrzeugverbund begrenzt wird, beispielsweise auf drei Fahrzeuge. Die Länge des Hindernisses wird somit begrenzt, so dass ein Auffahren bzw. Abfahren bei einer vorausschauenden Fahrweise ohne weiteres möglich ist. Weiterhin kann vorgesehen sein, dass der Fahrzeugverbund bei Erkennen einer Auffahrt oder einer Ausfahrt zeitweise in diesem Bereich in mehrere Teil-Fahrzeugverbünde (Sub-Platoons) aufgeteilt wird, unabhängig davon, ob ein Fahrzeug auffahren oder abfahren möchte. Dabei bewegt sich innerhalb jedes Teil-Fahrzeugverbundes eine bestimmte Anzahl an Fahrzeugen, zwischen denen als Soll-Abstand der Verbund-Folgeabstand vorgegeben wird. Zwischen den einzelnen Teil-Fahrzeugverbünden wird als Soll-Abstand ein Eintritts-Abstand vorgegeben, der es auffahrenden und abfahrenden Fahrzeugen im Bereich der Auffahrt bzw. der Ausfahrt ermöglicht, auf die Fahrspur des Fahrzeugverbundes zu wechseln. Nach dem Passieren der Auffahrt bzw. der Ausfahrt werden die Teil-Fahrzeugverbünde automatisch wieder zusammengeführt. Nachteilig hierbei ist, dass einzelne Fahrzeuge des Fahrzeugverbundes in dem Bereich von Auffahrten und Ausfahrten auch dann ihre Fahrdynamik verändern, wenn kein Fahrzeug auffahren bzw. abfahren möchte. Anschließend sind die Teil-Fahrzeugverbünde wieder zusammenzuführen. Insgesamt wird somit unter Umständen eine unnötige Regelung der Soll-Abstände durchgeführt, wodurch sich unnötige Brems- und Antriebsvorgänge für einen Teil der Fahrzeuge ergeben.

Das automatisierte Einstellen eines Soll-Abstandes nach Erkennen eines Fahrzeuges in der Fahrspur des Fahrzeugverbundes ist beispielsweise aus DE 11 2014 004 023 T5 bekannt. Demnach findet dennoch eine koordinierte Fahrt statt, wenn bereits ein unbekanntes Fahrzeug zwischen den Fahrzeugen des Fahrzeugverbundes auf dessen Fahrspur eingeschert ist. Der Fahrzeugverbund wird demnach aufgrund des unbekannten Fahrzeuges nachträglich in zwei Teil-Fahrzeugverbünde aufgeteilt, wobei sich diese weiterhin in abgestimmter Art und Weise zueinander bewegen. Zwischen den beiden Teil-Fahrzeugverbünden kann nach dem Eintritt des unbekannten Fahrzeuges ein Eintritts-Abstand eingestellt werden, der größer ist als der herkömmliche Soll-Abstand bzw. Verbund-Folgeabstand zwischen den einzelnen Fahrzeugen. Dadurch wird weiterhin ein koordinierter Fahrbetrieb sichergestellt und gleichzeitig gewährleistet, dass das unbekannte Fahrzeug die Fahrzeuge des Fahrzeugverbundes bzw. der Teil-Fahrzeugverbünde nicht beeinträchtigt. Nachteilig hierbei ist, dass erst dann mit einer Abstandserhöhung reagiert wird, wenn das unbekannte Fahrzeug bereits eingeschert ist.

Eine Unterteilung in mehrere Teil-Fahrzeugverbünde und demnach eine Reaktion auf das eingescherte Fahrzeug erfolgt demnach erst nach dem Zeitpunkt des Einscherens.

Gemäß US 9,396,661 B2 ist vorgesehen, dass sich ein Fahrzeugverbund in mehrere Fahrzeug-Verbünde aufteilen kann, wenn über ein Anforderungssignal von einem sich in der Umgebung bewegenden Fahrzeug angefordert wird, dass dieses Fahrzeug dem Fahrzeugverbund beitreten möchte. In koordinierter Art und Weise wird dann zwischen zwei festgelegten Fahrzeugen des Fahrzeugverbundes ein Eintritts-Abstand eingestellt, der es dem einscherbereiten Fahrzeug ermöglicht, in den Fahrzeugverbund einzutreten.

Demnach wird der Fahrzeugverbund auch hier in zwei Teil- Fahrzeugverbünde aufgeteilt, wobei dies auf eine aktive Anforderung des jeweiligen Fahrzeuges über eine drahtlose V2X-Kommunikation erfolgt. Verfügt ein einscherbereites Fahrzeug über keine derartige Möglichkeit der Kommunikation, kann es nur vor oder nach dem Fahrzeugverbund auf die Fahrbahn des Fahrzeugverbundes wechseln, wodurch die Auffahrt oder die Abfahrt auf eine Autobahn erschwert ist. Eine vergleichbare Vorgehensweise ist in US 9,799,224 B2 beschrieben.

In US 2016/0019782 A1 ist weiterhin beschrieben, dass im Umfeld um den Fahrzeugverbund befindlichen Fahrzeugen Warnhinweise oder Warninformationen dargelegt werden können, die der Fahrer des jeweiligen Fahrzeuges beispielsweise aufgrund der Ausdehnung des Fahrzeugverbundes bzw. der einzelnen Fahrzeuge selbst nicht wahrnehmen kann.

Aus der JP-A-2016 146 131 ist es bekannt ein Fahrzeug-Platoon vor Auffahrten und Ausfahrten zeitweilig in Teil-Fahrzeugverbände aufzuspalten. Dadurch entstehen größere Lücken in dem Fahrzeugverband in die auffahrende bzw. abfahrende Fahrzeuge einfahren können, um das Auffahren bzw. Abfahren von Fahrzeugen zu unterstützen. Nach Passierung der Auffahrt bzw. Ausfahrt wird die Aufspaltung des Platoons wieder beendet und die entstandenen Lücken werden wieder geschlossen.

Aus der DE 10 2009 015 170 A1 ist ein Verfahren und eine Vorrichtung zur Regelung der Fahrgeschwindigkeit eines Fahrzeugs, insbesondere Nutzfahrzeugs bekannt. Die Fahrgeschwindigkeit wird in Abhängigkeit einer Fahrgeschwindigkeit von in Fahrtrichtung hinter dem Eigenfahrzeug und/oder seitlich zu dem Fahrzeug detektierten Fremdfahrzeugen geregelt. Dies geschieht so, dass überholende und/oder von einer Fahrspur in eine eigene Fahrspur einfahrende Fremdfahrzeuge zeitgerecht einscheren können.

Aufgabe der Erfindung ist, ein Verfahren zum Koordinieren von Fahrzeugen eines Fahrzeugverbundes anzugeben, mit dem ein sicherer Fahrbetrieb der den Fahrzeugverbund umgebenden Fahrzeuge gewährleistet werden kann. Aufgabe der Erfindung ist weiterhin, eine Auswerteeinheit, ein Fahrzeug sowie ein Fahrzeugverbund anzugeben.

Diese Aufgabe wird durch ein Verfahren nach Anspruch 1 sowie eine Auswerteeinheit nach Anspruch 18 gelöst. Die Unteransprüche geben bevorzugte Weiterbildungen an.

Erfindungsgemäß ist demnach ein Verfahren zum Koordinieren eines Fahrzeugverbundes nach Anspruch 1 vorgesehen.

Damit bildet sich zwischen den jeweiligen Teil-Fahrzeugverbünden vorteilhafterweise lediglich dann ein Zwischenraum aus, wenn aus den Umgebungsdaten ein Fahrzeug erfasst wird, das in die Fahrspur des Fahrzeugverbundes einscheren möchte. Zwischen allen weiteren Fahrzeugen innerhalb eines Teil-Fahrzeugverbundes wird ein Verbund-Folgeabstand eingestellt, der geringer ist als der Eintrittsabstand, um ein aufeinander abgestimmtes effizientes Fahren innerhalb des Fahrzeugverbundes zu ermöglichen. Der Verbund-Folgeabstand kann dabei weniger als 25 Meter, insbesondere weniger als 15 Meter, betragen. Die Festlegung des Verbund-Folgeabstandes erfolgt vorzugsweise in Abhängigkeit von fahrdynamischen Eigenschaften der Fahrzeuge des Fahrzeugverbundes, die über die V2X-Kommunikation zwischen den einzelnen Fahrzeugen übertragen werden zum aufeinander abgestimmten Festlegen des Verbund-Folgeabstandes.

Der Verbund-Folgeabstand wird im Übrigen zwischen allen Fahrzeugen eingestellt, wenn das Eintrittskriterium nicht erfüllt ist und nachdem erfasst wurde, dass das einscherbereite Fahrzeug sich aus dem Zwischenraum wieder entfernt hat, was dem normalen Fahrbetrieb des Fahrzeugverbundes entspricht. Demnach werden die Fahrzeuge des Fahrzeugverbundes in den jeweiligen Situationen auf übliche Art und Weise mit Soll-Abständen betrieben, die unterhalb der üblichen Sicherheitsabstände liegen, so dass eine Ausnutzung des Windschattens bei geringen Reaktionszeiten aufgrund der V2X-Kommunikation zwischen den Fahrzeugen ermöglicht wird.

Der Fahrzeugverbund wird somit gezielt nur in gewissen Situationen geöffnet, in denen ein Fahrzeug in die Fahrspur des Fahrzeugverbundes auch tatsächlich eintreten bzw. einscheren möchte, wobei aber auch dann noch ein abgestimmter Fahrbetrieb erfolgen kann, da der Fahrzeugverbund nicht aufgelöst wird, sondern weiterhin über die V2X-Kommunikation miteinander kommuniziert werden kann. Durch den nicht allzu großen Soll-Abstand zwischen den Teil-Fahrzeugverbünden besteht eine verbesserte Möglichkeit zur drahtlosen V2X-Kommunikation derselben untereinander, als wenn die Teil-Fahrzeugverbünde fahrdynamisch unabhängig voneinander, und damit unter Umständen in sehr großen Soll-Abständen zueinander fahren würden.

Aufgrund des Rückgriffs auf die Umgebungsdaten, die vorzugsweise die Umgebung um den Fahrzeugverbund charakterisieren, ist der Fahrzeugverbund vorteilhafterweise nicht auf eine V2X-Kommunikation mit dem einscherbereiten Fahrzeug angewiesen. Demnach kann der Fahrzeugverbund die Situation selbst erkennen und bewerten, ob ein Fahrzeug einscheren möchte, um daraufhin einen Zwischenraum auszubilden. Die Umgebungsdaten werden dazu vorzugsweise von mindestens einem Umgebungserfassungssystem ausgegeben, wobei das jeweilige Umgebungserfassungssystem eine Umgebung um den Fahrzeugverbund überwacht, wobei die Umgebungsdaten über die V2X-Kommunikation zwischen den Fahrzeugen des Fahrzeugverbundes und/oder zwischen den Fahrzeugen und einer Infrastruktureinrichtung abseits des Fahrzeugverbbundes, die ein externes Umgebungserfassungssystem aufweist, übertragen werden können.

Demnach kann vorteilhafterweise mit internen Umgebungserfassungssystemen, die ohnehin in den Fahrzeugen vorhanden sind, und/oder unter Rückgriff auf Umgebungserfassungssysteme in der Umgebung, die beispielsweise eine Auffahrt bzw. eine Ausfahrt überwachen, erkannt werden, ob eine Unterteilung des Fahrzeugverbundes nötig ist. Diese Daten können in einfacher Weise über die V2X-Kommunikation bereitgestellt werden, wobei die Verarbeitung dieser Daten dann vorzugsweise in einer Auswerteinheit in einem der Fahrzeuge des Fahrzeugverbundes stattfinden kann, die dann den SollAbstand bzw. den Eintrittsabstand für das jeweilige Fahrzeug vorgibt, um den Verbund zu teilen.

Um die Prüfung sicherer zu gestalten, kann vorzugsweise vorgesehen sein, dass die Umgebungsdaten unterschiedlicher Umgebungserfassungssysteme fusioniert werden. Dadurch können verbesserte Tiefeninformationen extrahiert werden oder aber der Erfassungsbereich vergrößert werden, da ein Umgebungserfassungssystem in einem der hinteren Fahrzeuge oder abseits des Fahrzeugverbundes in einer Infrastruktureinrichtung unter Umständen mehr oder andere Bereiche der Umgebung sieht als das Umgebungserfassungssystem in den vorderen Fahrzeugen des Fahrzeugverbundes. Ferner kann dadurch erreicht werden, dass die Fahrzeuge weniger Sensoren benötigen, um das Umfeld ausreichend (insbesondere seitlich) zu erfassen, da die hinteren Fahrzeuge mit klassischerweise nach vorne gerichteten Sensoren auch seitliche Bereiche des Vordermanns abdecken können.

Erfindungsgemäß ist vorgesehen, dass als Eintrittskriterium geprüft wird, ob eine aus den Umgebungsdaten folgende prädizierte Trajektorie eines sich in der Umgebung befindlichen Fahrzeuges einen zukünftigen Auftreffpunkt auf den Fahrzeugverbund aufweist, um festzustellen, ob sich in der Umgebung ein einscherbereites Fahrzeug befindet, das beabsichtigt, im Bereich des Fahrzeugverbundes in die Fahrspur des Fahrzeugverbundes zu wechseln. Demnach kann in einfacher Weise aus den Umgebungsdaten erfasst werden, ob das Eintrittskriterium erfüllt ist und ein Unterteilen des Fahrzeugverbundes nötig bzw. sinnvoll ist.

In Abhängigkeit dieser Prüfung ist erfindungsgemäß vorgesehen, dass das Fahrzeug des Fahrzeugverbundes, dem als Soll-Abstand der Eintrittsabstand vorgegeben wird, um den Fahrzeugverbund zu unterteilen, in Abhängigkeit des Auftreffpunktes derartig ausgewählt wird, dass das der prädizierten Trajektorie folgende einscherbereite Fahrzeug seine Einscher-Geschwindigkeit beim Einscheren in den Zwischenraum in etwa beibehalten kann. Dadurch wird der Einschervorgang sicherer gestaltet, da der Zwischenraum genau in dem Bereich ausgebildet wird, in den das Fahrzeug unter Beibehaltung der Fahrdynamik eintreten würde.

Vorzugsweise ist weiterhin vorgesehen, dass zum Prüfen des Eintrittskriteriums Einscherhinweise berücksichtigt werden, wobei als Einscherhinweise das Aktivieren eines Blinkers und/oder einer Lichthupe eines Fahrzeuges in der Umgebung berücksichtigt werden, die anzeigen, ob das Fahrzeug in der Umgebung im Bereich des Fahrzeugverbundes auf die Fahrspur des Fahrzeugverbundes wechseln möchte. Demnach können weitere Hinweise herangezogen werden, um das mögliche Eintreten bzw. Einscheren eines Fahrzeuges zuverlässiger zu bewerten. Diese Hinweise können entweder allein oder zusammen mit der Trajektorie herangezogen werden, um beispielsweise eine Plausibilisierung zu ermöglichen.

Gemäß einer bevorzugten Ausführung kann weiterhin vorgesehen sein, dass das Eintrittskriterium lediglich dann geprüft wird und/oder bei Erfüllen des Eintrittskriteriums dem jeweiligen Fahrzeug lediglich dann der Eintrittsabstand als Soll-Abstand vorgegeben wird, um den Zwischenraum auszubilden, wenn sich der Fahrzeugverbund einer Auffahrt und/oder einer Ausfahrt nähert, so dass das Unterteilen in mindestens zwei Teil-Fahrzeugverbünde lediglich dann erfolgt, wenn sich der Fahrzeugverbund einer Auffahrt und/oder einer Ausfahrt nähert. Dadurch kann vorteilhafterweise erreicht werden, dass nur dann ein Zwischenraum ausgebildet wird, wenn mit hoher Wahrscheinlichkeit angenommen werden kann, dass ein Fahrzeug den Fahrzeugverbund durchqueren möchte, was normalerweise an Auffahrten oder Ausfahrten der Fall ist. Ein Einscheren und dauerhaftes Verbleiben in dem Zwischenraum kann dadurch verhindert werden. Auch das Vorhandensein einer Auffahrt und/oder einer Ausfahrt kann vorzugsweise aus den Umgebungsdaten folgen, so dass keine weiteren Daten nötig sind.

Besonders bevorzugt ist vorgesehen, dass im Rahmen der Unterteilung des Fahrzeugverbundes in mindestens zwei Teil-Fahrzeugverbünde durch Vorgabe und Einstellung des Eintrittsabstandes als Soll-Abstand im Fahrzeug nicht mit einem einscherbereiten Fahrzeug über die V2X-Kommunikation kommuniziert wird. Demnach kann auch auf Fahrzeuge in der Umgebung reagiert werden, wenn diese nicht über eine V2X-Kommunikation verfügen, da das Prüfen des Eintrittskriteriums ausschließlich anhand der Umgebungsdaten erfolgt.

Vorzugsweise ist vorgesehen, dass bei Erfüllen des Eintrittskriteriums ein Fahrzeug des Fahrzeugverbundes als Führungsfahrzeug eines Folge-Teil-Fahrzeugverbundes ausgewählt wird, wobei diesem ausgewählten Führungsfahrzeug des jeweiligen Folge-Teil-Fahrzeugverbundes als SollAbstand der Eintritts-Abstand vorgegeben wird, so dass einem Führungs-Teil-Fahrzeugverbund mindestens ein von dem ausgewählten Führungsfahrzeug angeführter Folge-Teil-Fahrzeugverbund in dem Eintrittsabstand folgt.

Der vorgegebene der Eintrittsabstand wird dabei gemäß einer Ausführung derartig festgelegt, dass sich nach Einstellen des Eintrittsabstandes als SollAbstand ein Zwischenraum zwischen den dadurch ausgebildeten Teil-Fahrzeugverbünden ausbildet, so dass ein einscherbereites Fahrzeug mit einer Fahrzeuglänge, die eine vorab festgelegte Maximallänge nicht überschreitet, zwischen den mindestens zwei Teil-Fahrzeugverbünden auf die Fahrbahn des Fahrzeugverbundes in den Zwischenraum wechseln kann. Die Maximallänge kann dabei zwischen 5m und 10m, vorzugsweise 6m, betragen. Somit wird mit geringem Regelungs- und Auswerteaufwand ein Eintrittsabstand festgelegt, der ein Großteil der Fahrzeuge, insbesondere PKW, erfasst, für die der Fahrzeugverbund ein Hindernis darstellen kann und die mit dem Fahrzeugverbund herkömmlicherweise nicht kommunizieren und sich demnach auch nicht über eine drahtlose V2X-Kommunikation bemerkbar machen können. Dadurch wird für diese Arten von Fahrzeugen ein Eintrittsabstand festgelegt, der ein exaktes Erfassen der Länge nicht zwingend benötigt.

Gemäß einer alternativen Ausführungsform kann jedoch auch vorgesehen sein, dass der Eintrittsabstand in Abhängigkeit der Fahrzeuglänge des einscherbereiten Fahrzeuges festgelegt wird, wobei die Fahrzeuglänge aus den Umgebungsdaten abgeleitet wird. Dadurch kann eine gezielte Teilung des Fahrzeugverbundes erfolgen.

Somit wird der Zwischenraum lediglich in Abhängigkeit von geometrischen Größen eines potentiell einscherbereiten Fahrzeuges festgelegt, um diesem die Möglichkeit des Passierens bzw. Überquerens der Fahrbahn des Fahrzeugverbundes zu geben, d.h. dann, wenn der Fahrzeugverbund aufgrund seiner Länge ein Hindernis darstellt, insbesondere bei Auffahrten oder Ausfahrten. Der Eintrittsabstand sollte in jedem Fall geringer als der übliche Sicherheitsabstand sein, so dass der Fahrzeugverbund auch als geteilter Fahrzeugverbund und nicht als zwei unabhängige Fahrzeugverbünde von außen wahrgenommen wird und Fahrzeuge nicht dauerhaft zwischen die Teil-Fahrzeugverbünde einscheren.

Gemäß einer bevorzugten Ausführung ist dazu vorgesehen, dass der Eintrittsabstand zusätzlich in Abhängigkeit eines Mindest-Abstandes festgelegt wird, der vor und nach dem einscherbereiten Fahrzeug der Fahrzeuglänge oder der Maximallänge eingehalten wird, wobei der Mindest-Abstand zwischen 10m und 25m liegt. Durch das Ansetzen des Mindestabstandes wird eine Art reduzierter Sicherheitsabstand berücksichtigt. Dieser stellt sicher, dass der Fahrer des einscherbereiten Fahrzeuges erkennt, dass ihm eine Möglichkeit gegeben wird, durch das Hindernis mit hoher Sicherheit hindurchzufahren. Bei zu geringem Eintritts-Abstand kann es sonst dazu kommen, dass der Fahrer eines einscherbereiten Fahrzeuges ängstlich reagiert, da er das Eintreten in einen sehr langen Fahrzeugverbund aus z.B. Nutzfahrzeugen für ein hohes Risiko hält. Zudem kann durch den Mindestabstand das Risiko für Auffahrunfälle vermieden werden, während sich das Fahrzeug zwischen den Teil-Fahrzeugverbünden befindet. Anders als die Fahrzeuge des Fahrzeugverbundes, stimmt sich das eingescherte Fahrzeug nämlich nicht mit den übrigen Fahrzeugen ab. Allerdings verbleibt das eingescherte Fahrzeug normalerweise nicht sehr lange in dem Zwischenraum. Falls doch kann vorgesehen sein, dass der Eintritts-Abstand entsprechend angepasst wird und/oder dem eingescherten Fahrzeug ein Hinweis gegeben wird, dass es die Fahrbahn des Fahrzeugverbundes verlassen soll.

Gemäß einer bevorzugten Weiterbildung ist vorgesehen, dass der Eintrittsabstand unter der Bedingung festgelegt wird, dass Fahrzeuge unterschiedlicher Teil-Fahrzeugverbünde nach Einstellen des Eintrittsabstandes weiterhin über die V2X-Kommunikation drahtlos miteinander mittelbar oder unmittelbar kommunizieren können zum fortlaufenden Abstimmen des gesamten Fahrzeugverbundes. Dadurch wird vorteilhafterweise erreicht, dass der gesamte Fahrzeugverbund trotz des ausgebildeten Zwischenraums immer auch koordiniert betrieben werden kann, um auf die aktuelle Fahrsituation zu reagieren.

Vorzugsweise kann weiterhin vorgesehen sein, dass der Eintrittsabstand in Abhängigkeit davon festgelegt wird, ob zwei oder mehrere einscherbereite Fahrzeuge in der Umgebung erkannt werden. Vorteilhafterweise kann somit auch mehr als einem Fahrzeug Platz zum Überqueren gegeben werden, falls dies als effizient und sinnvoll erachtet wird, beispielsweise dann, wenn zwei Fahrzeuge unmittelbar hintereinander auffahren wollen und der Fahrzeugverbund dadurch nicht zu weit zu öffnen ist.

Vorzugsweise wird im Rahmen der Erfindung als einscherbereites Fahrzeug ein auffahrendes Fahrzeug verstanden, das beabsichtigt, von einer Auffahrt auf die Fahrbahn des Fahrzeugverbundes zu wechseln, oder ein abfahrbereites Fahrzeug, das beabsichtigt, von einer benachbarten Fahrbahn über die Fahrbahn des Fahrzeugverbundes auf eine Ausfahrt zu wechseln. Grundsätzlich sind aber auch andere Einschervorgänge möglich, um sicherheitskritische Situationen zu vermeiden.

Erfindungsgemäß ist weiterhin eine Auswerteeinheit nach Anspruch 18 vorgesehen, mit der das beschriebene Verfahren durchgeführt wird.

Erfindungsgemäß ist auch ein Fahrzeug, das insbesondere als Leitfahrzeug in einem Fahrzeugverbund fungiert, vorgesehen, das eine derartige Auswerteeinheit aufweist. Weiterhin ist ein Fahrzeugverbund aus mehreren Fahrzeugen vorgesehen, wobei zumindest eines der Fahrzeuge als Leitfahrzeug eine derartige Auswerteeinheit aufweist und das Leitfahrzeug mit den Fahrzeugen des Fahrzeugverbundes über eine V2X-Kommunikation drahtlos kommunizieren kann, wobei die Fahrzeuge jeweils ein Abstandsregelsystem aufweisen, wobei das Abstandsregelsystem jeweils ausgebildet ist, den vom Leitfahrzeug über die Auswerteinheit vorgegebenen und über die V2X-Kommunikation übertragenen Soll-Abstand zum jeweils vorausfahrenden Fahrzeug des Fahrzeugverbundes einzustellen zum zumindest zeitweisen Unterteilen des Fahrzeugverbundes in mindestens zwei Teilfahrzeug-Verbünde.

Die Erfindung wird im Folgenden anhand von Zeichnungen näher erläutert. Es zeigen:
- Fig. 1: einen Fahrzeugverbund aus mehreren Fahrzeugen auf einer mehrspurigen Straße;
- Fig. 2a, 2b: den Fahrzeugverbund gemäß Fig. 1 in einer Auffahrsituation bzw. in einer Abfahrsituation;
- Fig. 3: ein Flussdiagramm des erfindungsgemäßen Verfahrens.

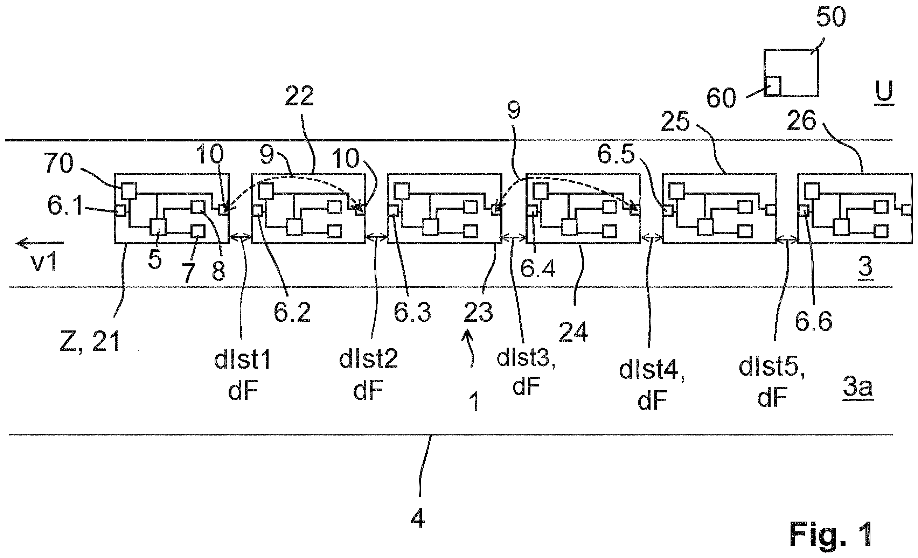

Gemäß Figur 1 ist ein Fahrzeugverbund 1 aus einer Anzahl N von sechs Fahrzeugen 2i mit i = 1, 2, ... N dargestellt, die sich in einem bestimmten Ist-Abstand dlstj, mit j = 1, 2, ... N-1 zueinander auf einer Fahrbahn 3 einer mehrspurigen Straße 4, z.B. eines Highways, bewegen. Als Fahrzeugverbund 1 wird dabei im Rahmen der Erfindung eine Aneinanderreihung von Fahrzeugen 2i verstanden, die sich aufeinander abgestimmt bewegen, um durch Ausnutzung des Windschattens und Vermeiden von unnötigen Beschleunigungs- und Verzögerungsphasen einen möglichst ökonomischen Fahrbetrieb zu gewährleisten. Ein derartiger Fahrzeugverbund 1 ist dem Fachmann auch als Fahrzeugverband, Fahrzeugkonvoi, Fahrzeugzug, Fahrzeugkolonne oder Platoon bekannt.

Der gesamte Fahrzeugverbund 1 wird von einem Leitfahrzeug Z, das in Figur 1 gleichzeitig das erste Fahrzeug 21 des Fahrzeugverbundes 1 ist, koordiniert. Grundsätzlich kann aber auch eines der anderen Fahrzeuge 2i das Leitfahrzeug Z sein. Das Leitfahrzeug Z legt zum Koordinieren des Fahrzeugverbundes 1 anhand von vorbestimmten Parametern fest, in welchem Soll-Abstand dSollj mit j = 1, 2, ... N-1 sich die einzelnen Fahrzeuge 2i des Fahrzeugverbundes 1 zueinander bewegen sollen.

Der Soll-Abstand dSollj zwischen den einzelnen Fahrzeugen 2i kann beispielsweise in Abhängigkeit von fahrzeugspezifischen Eigenschaften des jeweiligen Fahrzeuges 2i, beispielsweise eines Bremsvermögens, eines Fahrzeugstatus, etc. festgelegt werden, sowie unter der Vorgabe erfolgen, dass ein besonders effizienter Fahrbetrieb im gesamten Fahrzeugverbund 1 unter Ausnutzung des Windschattens ermöglicht wird. Ein derartig festgelegter sog. Verbund-Folgeabstand dF als Soll-Abstand dSollj zwischen den jeweiligen Fahrzeugen 2i darf geringer als der übliche Sicherheitsabstand zwischen zwei Fahrzeugen sein, da sich die Fahrzeuge 2i aufeinander abgestimmt bewegen und dazu untereinander kommunizieren, wodurch ein sicherer Fahrbetrieb auch dann noch gewährleistet werden kann.

Um den jeweils festgelegten Soll-Abstand dSollj zwischen den einzelnen Fahrzeugen 2i einstellen zu können, weist jedes der Fahrzeuge 2i ein Abstandsregelsystem 5 auf, wobei das jeweils i-te Fahrzeug 2i darüber nach Art eines Abstandsregeltempomaten den Ist-Abstand dlstj (mit j = i - 1) zum jeweils vorausfahrenden (i-1)-ten Fahrzeug 2(i-1) über ein internes Umgebungserfassungssystem 6i im eigenen Fahrzeug 2i erfasst und den erfassten Ist-Abstand dlstj durch einen Eingriff in das Bremssystem 7 und/oder das Antriebssystem 8 des eigenen Fahrzeuges 2i auf den vom Leitfahrzeug Z vorgegebenen Sollabstand dSollj (mit j = i - 1) zum vorausfahrenden (i-1)-ten Fahrzeug 2(i-1) einregelt.

Die Übermittlung des festgelegten Soll-Abstandes dSollj vom Leitfahrzeug Z auf die jeweiligen Fahrzeuge 2i des Fahrzeugverbundes 1 erfolgt über eine drahtlose V2X-Kommunikation 9, die zwischen den einzelnen Fahrzeugen 2i ausgebildet ist. Dazu ist in jedem der Fahrzeuge 2i eine V2X-Einheit 10 angeordnet, die in herkömmlicher Weise ein Sende- und Empfangsmodul aufweist, über das insbesondere der Soll-Abstand dSollj gesendet und empfangen werden kann, so dass dieser über das Abstandsregelsystem 5 im jeweiligen Fahrzeug 2i eingestellt werden kann. Das Abstandsregelsystem 5 ist dazu mit der V2X-Einheit 10 in beliebiger Weise signalleitend verbunden.

Als V2X (Vehicle-to-Everything) wird hierbei eine drahtlose Kommunikationsmöglichkeit bezeichnet, die es erlaubt, den einzelnen Fahrzeugen 2i Signale über ein bestimmtes Interface bzw. gemäß einem bestimmten Protokoll bereitzustellen, um sich zu koordinieren. Verläuft eine derartige Kommunikation nur zwischen den Fahrzeugen 2i wird sie als V2V (Vehicle-to-Vehicle) bezeichnet. Es ist jedoch auch eine Kommunikation zwischen einem Fahrzeug 2i und einer Infrastruktureinrichtung 50 am Rande der Fahrbahn 3 möglich, was dann als V2I (Vehicle-to-Infrastructure) bezeichnet wird.

Als Übertragungsart kann beispielsweise eine kurzreichweitige DSRC-Verbindung (Dedicated Short-Range Communication) oder eine drahtlose Verbindung nach einem der IEEE-Standards, z.B. IEEE 802.11 (Wireless Access in Vehicular Environments (WAVE)) oder IEEE 802.11p (vgl. IEEE 802.11 Wireless LAN medium access layer (MAC)) verwendet werden. Dabei kann die V2X-Einheit 10 beispielsweise eine Signalübertragung über WiFi, WLAN, Ultra Mobile Broadband (UMB), Bluetooth (BT), Near Field Communication (NFC), Radio-Freguency Identification (RFID), Z-wave, ZigBee, Low power Wireless Personal Area Networks (6LoWPAN), Wireless Highway Addressable Remote Transducer (HART) Protocol, Wireless Universal Serial Bus (USB) oder über optische Kommunikationsmöglichkeiten, z.B. Infrared Data Association (IrDA), ermöglichen. Alternativ sind aber auch Übertragungen über die (Mobilfunk)standards 3GPP LTE, LTE-Advanced, E-UTRAN, UMTS, GSM, GSM/ EDGE, WCDMA, Time Division Multiple Access (TDMA), Freguency Division Multiple Access (FDMA), Orthogonal FDMA (OFDMA), Single-Carrier FDMA (SC-FDMA), Worldwide Interoperability for Microwave Access (WiMax), Ultra Mobile Broadband (UMB), High Speed Packet Access (HSPA), Evolved Universal Terrestrial Radio Access (E-UTRA), Universal Terrestrial Radio Access (UTRA), GSM EDGE Radio Access Network (GERAN), etc. möglich.

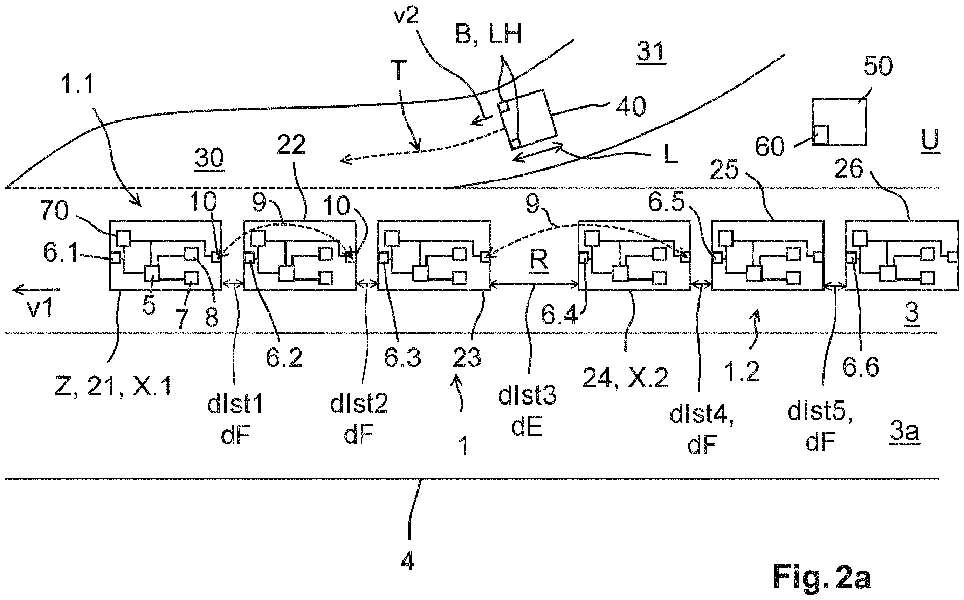

Der somit zusammengestellte Fahrzeugverbund 1 bewegt sich nach Einstellung der jeweiligen Sollabstände dSollj mit einer bestimmten VerbundGeschwindigkeit v1 auf der Fahrbahn 3. Bewegt sich ein derartiger Fahrzeugverbund 1 gemäß Fig. 2a auf einen Auffahrt-Bereich 30 der mehrspurigen Straße 4 zu, über den ein auffahrendes Fahrzeug 40 von einer Auffahrt 31 auf die mehrspurige Straße 4 wechseln kann, so kann der Fahrzeugverbund 1 ein Hindernis für dieses auffahrende Fahrzeug 40 darstellen. Dies ist genau dann der Fall, wenn das auffahrende Fahrzeug 40 im Auffahrt-Bereich 30 zum Auffahren auf die Fahrspur 3 bereit ist, während der Fahrzeugverbund 1 gerade den Auffahrt-Bereich 30 passiert.

Um dem zu begegnen, kann das auffahrende Fahrzeug 40 vorausschauend derartig die Auffahrt 31 entlangfahren, dass es vor oder nach dem Fahrzeugverbund 1 auf die Fahrspur 3 wechselt. Bei einem sehr langen Fahrzeugverbund 1 kann dies allerdings ein Sicherheitsrisiko darstellen, da das auffahrende Fahrzeug 40 zu stark beschleunigen oder auf dem Standstreifen fahren muss, um vor dem Fahrzeugverbund 1 einzuscheren, oder stark und unter Umständen fast in den Stillstand abbremsen muss, um nach dem Fahrzeugverbund 1 einzuscheren.

Eine weitere Möglichkeit ist das Einscheren zwischen den Fahrzeugen 2i des Fahrzeugverbundes 1. Der Verbund-Folgeabstand dF zwischen den Fahrzeugen 2i ist allerdings normalerweise so gering, z.B. 15m, dass ein auffahrendes Fahrzeug 40 bei einer hohen Verbund-Geschwindigkeit v1 von ca. 70-90km/h nur sehr schwer dazwischen einscheren kann, ohne dabei ein erhöhtes Sicherheitsrisiko einzugehen.

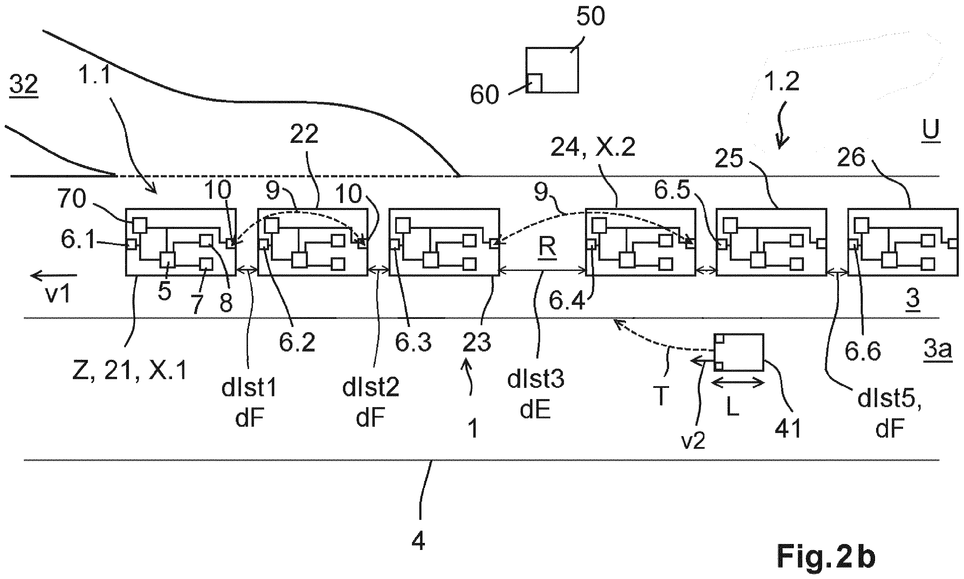

Eine vergleichbare kritische Situation geht aus Fig. 2b hervor, in der sich ein abfahrbereites Fahrzeug 41 auf der benachbarten Fahrbahn 3a zum Fahrzeugverbund 1 befindet. Dieses beabsichtigt, die nächste Ausfahrt 32 von der mehrspurigen Straße 4 zu nehmen, wobei der Fahrzeugverbund 1 auch hier wieder ein Hindernis darstellen kann. Das abfahrbereite Fahrzeug 41 kann demnach durch Beschleunigen oder Verzögern versuchen, vor oder nach dem Fahrzeugverbund 1 auf die Fahrspur 3 des Fahrzeugverbundes 1 zu wechseln, um anschließend auf die Ausfahrt 32 zu gelangen, was allerdings nicht immer möglich ist, ohne den anderen Verkehr zu behindern. Weiterhin kann es auch zwischen den Fahrzeugen 2i des Fahrzeugverbundes 1 auf die Fahrbahn 3 einscheren, was allerdings ein erhöhtes Sicherheitsrisiko darstellt.

Um diese kritischen Fahrsituationen zu vermeiden, wird der Fahrzeugverbund 1 erfindungsgemäß situativ in eine Anzahl M von mindestens zwei Teil-Fahrzeugverbünden 1.k, k=1, 2, ...M aufgeteilt, wobei einem Führungs-Teil-Fahrzeugverbund 1.1 mindestens ein Folge-Teil-Fahrzeugverbund 1.k, k>1 folgt und zwischen jedem Teil-Fahrzeugverbund 1.k ein Zwischenraum R ausgebildet ist. Im Ausführungsbeispiel der Figuren 2a, 2b sind zwei Teil-Fahrzeugverbünde 1.1, 1.2 mit einem Zwischenraum R dazwischen vorgesehen, wobei jeder Teil-Fahrzeugverbund 1.1, 1.2 jeweils aus drei Fahrzeugen 2i besteht. Sind weitere Fahrzeuge 2i, d.h. N>6, im Fahrzeugverbund 1 vorgesehen, können auch mehr als zwei Teil-Fahrzeugverbünde 1.k mit k=1, 2, 3,..., M, d.h. mehr als ein Folge-Teil-Fahrzeugverbund 1.k, k>1, und/oder Teil-Fahrzeugverbünde 1.k mit jeweils mehr als drei Fahrzeugen 2i, vorzugsweise aber nicht mehr als jeweils acht Fahrzeugen 2i, insbesondere nicht mehr als jeweils fünf Fahrzeugen 2i, ausgebildet werden.

Das erste Fahrzeug 21, 24 des jeweiligen Teil-Fahrzeugverbundes 1.k wird im Folgenden als Führungsfahrzeug X.k des k. Teil-Fahrzeugverbundes 1.k bezeichnet, das somit den jeweiligen Teil-Fahrzeugverbund 1.k anführt. Demnach ist in Fig. 2a, 2b das erste Fahrzeug 21 des Fahrzeugverbundes 1 gleichzeitig auch das Führungsfahrzeug X.1 des ersten Teil-Fahrzeugverbundes 1.1 bzw. des Führungs-Teil-Fahrzeugverbundes 1.1 und das vierte Fahrzeug 24 des Fahrzeugverbundes 1 das Führungsfahrzeug X.2 des zweiten Teil-Fahrzeugverbundes 1.2 bzw. des ersten Folge-Teil-Fahrzeugverbundes 1.2.

Der situativ eingestellte Abstand zwischen den Teil-Fahrzeugverbünden 1.k, in Fig. 2a, 2b der dritte Ist-Abstand dlst3 zwischen dem dritten Fahrzeug 23 bzw. dem letzten Fahrzeug des ersten Teil-Fahrzeugverbundes 1.1 (Führungs-Teil-Fahrzeugverbund 1.1) und dem vierten Fahrzeug 24 bzw. dem Führungsfahrzeug X.2 des zweiten Teil-Fahrzeugverbundes 1.2 (erster Folge-Teil-Fahrzeugverbund 1.2), wird im Folgenden allgemein als Eintrittsabstand dE bezeichnet, der somit eine Länge des Zwischenraums R zwischen den Teil-Fahrzeugverbünden 1.k angibt.

Die situative Teilung des Fahrzeugverbundes 1 in mehrere derartige Teil-Fahrzeugverbünde 1.k wird vorzugsweise vom Leitfahrzeug Z ausgehend koordiniert, wobei das Leitfahrzeug Z nach Prüfen von Eintrittskriterien K festlegt, welches Fahrzeug 2i des Fahrzeugverbundes 1 ein Führungsfahrzeug X.k, k>1 eines Folge-Teil-Fahrzeugverbundes 1.k, k>1 werden soll. Anschließend wird diesem festgelegten Fahrzeug 2i bzw. Führungsfahrzeug X.k, k>1 des Folge-Teil-Fahrzeugverbundes 1.k, k>1 als Soll-Abstand dSollj ein Eintrittsabstand dE vorgegeben, der dann üblicherweise größer ist als der festgelegte Verbund-Folgeabstand dF für die Fahrzeuge 2i innerhalb eines Teil-Fahrzeugverbundes 1.k. Durch Einstellen dieses Eintrittsabstandes dE über das Abstandsregelsystem 5 des jeweiligen Führungsfahrzeuges X.k, k>1 wird der Fahrzeugverbund 1 dann geteilt.

Durch die erfindungsgemäße Aufteilung des Fahrzeugverbundes 1 wird es dem auffahrenden Fahrzeug 40 demnach vereinfacht, zwischen den mehreren Teil-Fahrzeugverbünden 1.k in den Zwischenraum R auf die mehrspurige Straße 4 aufzufahren, da der Eintrittsabstand dE größer ist als der Verbund-Folgeabstand dF. Somit wird dem auffahrenden Fahrzeug 40 je nach Anzahl M an Teil-Fahrzeugverbünden 1.k mindestens eine weitere Möglichkeit zum Einscheren gegeben, die weniger sicherheitskritisch ist als das Einscheren zwischen den Fahrzeugen 2i eines Teil-Fahrzeugverbundes 1.k oder vor und nach dem gesamten Fahrzeugverbund 1.

Die situative Vorgabe des Eintrittsabstandes dE zur Teilung des Fahrzeugverbundes 1 erfolgt in Abhängigkeit von zu prüfenden Eintrittskriterien K. Demnach reagiert der Fahrzeugverbund 1 unter gegebenen Umständen auf bestimmte Ereignisse in einer Umgebung U, vorzugsweise auf mögliche Einschervorgänge von anderen Fahrzeugen 40, 41. Die Ereignisse werden hierbei allerdings nicht durch eine aktive Kommunikation, z.B. eine Einscheranforderung, zwischen dem möglicherweise einscherenden Fahrzeug 40, 41 und den Fahrzeugen 2i des Fahrzeugverbundes 1 ausgelöst. Vielmehr erkennt der Fahrzeugverbund 1 bzw. das Leitfahrzeug Z ein solches Ereignis selbst.

Das Prüfen der Eintrittskriterien K erfolgt im Leitfahrzeug Z anhand von Umgebungsdaten UD, die dem Leitfahrzeug Z über die drahtlose V2X-Kommunikation 9 bereitgestellt oder durch das Leitfahrzeug Z selbst ermittelt werden. Die Umgebungsdaten UD können hierbei von den Fahrzeugen 2i des Fahrzeugverbundes 1 selbst oder von außerhalb, beispielsweise von einer Infrastruktureinrichtung 50, bereitgestellt werden. Die Umgebungsdaten UD beinhalten hierbei aus der Umgebung U aufgenommene Informationen bzw. Abbildungen, aus denen sich herleiten lässt, ob sich in der Umgebung U um den Fahrzeugverbund 1 ein einscherbereites Fahrzeug 40, 41 befindet, das voraussichtlich beabsichtigt, im Bereich des Fahrzeugverbundes 1 auf die Fahrbahn 3 des Fahrzeugverbundes 1 zu wechseln. Ergänzend kann aus den Umgebungsdaten UD eine Fahrzeuglänge L dieses einscherbereiten Fahrzeuges 40, 41 abgeschätzt werden.

Diese Informationen können beispielsweise aus den Umgebungsdaten UD extrahiert werden, die von dem internen Umgebungserfassungssystem 6i im jeweiligen Fahrzeug 2i des Fahrzeugverbundes 1 oder aber die von einem externen Umgebungserfassungssystem 60 außerhalb der Fahrzeuge 2i, beispielsweise an der jeweiligen Infrastruktureinrichtung 50, aufgenommen und ausgegeben werden. Dazu weist das jeweilige Umgebungserfassungssystem 6i, 60 beispielsweise eine Kamera und/oder ein Radarsystem und/oder LI-DAR auf, die jeweils Objekte in der Umgebung U erfassen können und in Abhängigkeit davon jeweils die Umgebungsdaten UD ausgeben. Vorteilhafterweise sind übliche Fahrzeuge 2i mit einem internen Umgebungserfassungssystem 6i z.B. im Rahmen des Abstandsregelsystems 5 bereits ausgestattet, so dass keine Nachrüstung erforderlich ist und lediglich für eine Ausgabe über die V2X-Kommunikation 9 durch die V2X-Einheit 10 zu sorgen ist, so dass das Leitfahrzeug Z darauf zugreifen kann.

Durch das Bereitstellen der Umgebungsdaten UD über die drahtlose V2X-Kommunikation 9 kann das Leitfahrzeug Z die aktuelle Umgebungssituation nicht nur in Abhängigkeit des Blickwinkels des eigenen Umgebungserfassungssystems 61 bewerten, sondern kann die aktuelle Umgebungssituation auch aus einem anderen Blickwinkel, d.h. beispielsweise aus der Sicht der hinteren Fahrzeuge 2i mit i >1 oder aber der Infrastruktureinrichtung 50 abseits der Fahrbahn 3 erfassen und bewerten. Dabei kann auch eine Fusion von Umgebungsdaten UD unterschiedlicher Umgebungserfassungssysteme 6i, 60 stattfinden, um die Zuverlässigkeit bei der Prüfung des Eintrittskriteriums K zu erhöhen. So kann beispielsweise ein weiter hinten fahrendes Fahrzeug 2i des Fahrzeugverbundes 1 eine genauere Tiefeninformation über die Umgebung U bzw. erkannte Fahrzeuge 40, 41 liefern und damit eine genauere Bestimmung der zukünftigen Fahrbewegung des Fahrzeuges 40, 41, z.B. in Form einer prädizierten Trajektorie T, sowie der Fahrzeuglänge L im Leitfahrzeug Z ermöglichen. Zudem können von einem weiter hinten liegenden Fahrzeug 2i des Fahrzeugverbundes 1 Umgebungsdaten UD erfasst werden, die beispielsweise von dem Leitfahrzeug Z nicht erfasst werden können, da der Erfassungsbereich des Umgebungserfassungssystems 61 im Leitfahrzeug Z dies nicht zulässt. Damit kann eine Nachrüstung von seitlich blickenden Sensoren in den vorderen Fahrzeugen 2i des Fahrzeugverbundes 1 entfallen, da die hinteren Fahrzeuge 2i Informationen über diese Bereiche der Umgebung U liefern können.

Die Auswertung bzw. Bewertung der Umgebungsdaten UD erfolgt dabei in einer Auswerteinheit 70 im Leitfahrzeug Z, in der das Eintrittskriterium K für jedes erkannte, vorzugsweise sich bewegende Objekt in der Umgebung U geprüft wird. Das Bewerten eines sich bewegenden Objektes erfolgt hierbei beispielsweise durch einen Objekterfassungs-Algorithmus, der aus den ausgegebenen Umgebungsdaten UD Objektkonturen erkennt und diese zeitlich vorzugsweise tiefenaufgelöst verfolgt. Daraus kann eine Trajektorie T für das jeweilige erkannte Objekt bzw. Fahrzeug 40, 41 prädiziert werden und daraus, ob das Fahrzeug 40, 41 beabsichtigt, in die Fahrspur 3 des Fahrzeugverbundes 1 einzuscheren.

Das Eintrittskriterium K kann dann für das jeweilige Objekt erfüllt sein, wenn anhand der prädizierten Trajektorie T festgestellt wird, dass das als einscherbereit erkannte Fahrzeug 40, 41 im Bereich des Fahrzeugverbundes 1 auf die Fahrspur 3 des Fahrzeugverbundes 1 trifft. Gleichzeitig kann dabei berücksichtigt werden, ob das einscherbereite Fahrzeug 40, 41 in sicherheitsunkritischer Weise vor oder nach dem Fahrzeugverbund 1 einscheren könnte, z.B. durch eine geringe Änderung seiner Fahrdynamik, d.h. eine leichte Beschleunigung oder Verzögerung.

Infolge des erfüllten Eintrittskriteriums K wird der Fahrzeugverbund 1 geteilt, um dem einscherbereiten Fahrzeug 40, 41 eine Einschermöglichkeit auf die Fahrbahn 3 des Fahrzeugverbundes 1 zu bieten. Dazu wird anhand der prädizierten Trajektorie T des einscherbereiten Fahrzeuges 40, 41 ein Fahrzeug 2i des Fahrzeugverbundes 1 ausgewählt, dem der Eintrittsabstand dE als Soll-Abstand dSollj vorgegeben wird und das dann ein Führungsfahrzeug X.k, k>1 eines Folge-Teil-Fahrzeugverbundes 1.k, k>1 wird.

Die Auswahl des Führungsfahrzeuges X.k, k>1 kann derartig erfolgen, dass das einscherbereite Fahrzeug 40, 41 seine aktuelle Fahrdynamik, d.h. seine Einscher-Geschwindigkeit v2, möglichst wenig ändern muss. Dies kann beispielsweise durch ein Ermitteln eines Auftreffpunktes Z der Trajektorie T auf den Fahrzeugverbund 1 geschehen. Stellt das jeweils festgelegte Führungsfahrzeug X.k, k>1 den Eintrittsabstand dE entsprechend über sein Abstandsregelsystem 5 ein, kann das einscherbereite Fahrzeug 40, 41 ohne weiteres in den dadurch entstehenden Zwischenraum R auf die Fahrspur 3 des Fahrzeugverbundes 1 wechseln. Alle weiteren Fahrzeuge 2i dieses Folge-Teil-Fahrzeugverbundes 1.k, k>1 folgen dann der veränderten Bewegung des Führungsfahrzeuges X.k, k>1 des jeweiligen Folge-Teil-Fahrzeugverbundes 1.k, k>1, so dass die Bewegung des gesamten Fahrzeugverbundes 1 weiterhin aufeinander abgestimmt ist.

Die Länge des Eintrittsabstandes dE bzw. des Zwischenraumes R kann unterschiedlich festgelegt werden, nachdem ein erfülltes Eintrittskriterium K festgestellt wurde:
Im einfachsten Fall kann der Eintrittsabstand dE auf einen derartigen Wert festgesetzt werden, dass einscherbereite Fahrzeuge 40, 41, vorzugsweise PKWs, mit Fahrzeuglängen L von üblicherweise bis zu 6 Metern, zumindest kurzzeitig einscheren können und dabei nicht gefährdet werden. Somit wird für das einscherbereite Fahrzeug 40, 41 eine Maximallänge LMax von 6 Metern angenommen. Dadurch kann der Regelaufwand und der Objekterkennungs-Algorithmus vereinfacht werden, da eine exakte Ermittlung der Fahrzeuglänge L aus den Umgebungsdaten UD nicht nötig ist.

Ausgehend von dieser Maximallänge LMax von 6 Metern wird ergänzend ein Mindestabstand dmin von zwischen 10m und 25m berücksichtigt, der zwischen dem einscherbereiten Fahrzeug 40, 41 der angenommenen Maximallänge LMax und dem jeweils davor und dahinter fahrenden Teil-Fahrzeugverbund 1.k auf jeden Fall eingehalten werden soll. Der Eintrittsabstand dE kann demnach beispielsweise auf einen Wert zwischen ca. 25m und 60m, insbesondere 35m, festgelegt werden. Dabei ist zu berücksichtigen, dass einscherende Fahrzeuge 40, 41 normalerweise nur kurz auf der Fahrspur 3 des Fahrzeugverbundes 1 zwischen den Teil-Fahrzeugverbünden 1.k verbleiben und kurze Zeit später die Spur wechseln werden, um den Fahrzeugverbund 1 zu überholen oder sich hinter den Fahrzeugverbund 1 zurückfallen lassen.

Gemäß einer weiteren Ausführung kann jedoch auch vorgesehen sein, dass der Eintrittsabstand dE in Abhängigkeit der aus den Umgebungsdaten UD abgeleiteten Fahrzeuglänge L des als einscherbereit erkannten Fahrzeuges 40, 41 festgelegt wird. Der Eintrittsabstand dE wird also derartig festgelegt, dass gilt: dSollj = dE ≥ L + 2 x dmin mit den o.g. Parametern für den Mindestabstand dmin.

Weiterhin wird bei der Festlegung des Eintrittsabstandes dE als Soll-Abstand dSollj berücksichtigt, dass die Fahrzeuge 2i des gesamten Fahrzeugverbundes 1 über die drahtlose V2X-Kommunikation 9 weiterhin kommunizieren können. Die Teil-Fahrzeugverbünde 1.k werden demnach nicht zu weit voneinander getrennt, um weiterhin einen aufeinander abgestimmten und effizienten Fahrbetrieb über den gesamten Fahrzeugverbund 1 zu gewährleisten. Gleichzeitig wird dennoch das Einscheren eines als einscherbereit erkannten Fahrzeuges 40, 41 sicher und zuverlässig ermöglicht, ohne dabei den Fahrbetrieb des Fahrzeugverbundes 1 zu stören.

Zum Prüfen des Eintrittskriteriums K kann ergänzend oder alternativ zu der Ermittlung der prädizierten Trajektorie T des jeweiligen Fahrzeuges 40, 41 in der Umgebung U anhand der zur Verfügung stehenden Umgebungsdaten UD geprüft werden, ob das Fahrzeug 40, 41 in irgendeiner Weise über einen Einscherhinweis H anzeigt, dass es auf die Fahrbahn 3 des Fahrzeugverbundes 1 wechseln möchte. Dazu kann beispielsweise die Aktivierung eines Blinkers B des jeweiligen Fahrzeuges 40, 41 in Richtung der Fahrbahn 3 des Fahrzeugverbundes 1 als Einscherhinweis H geprüft werden. Aus den Umgebungsdaten UD kann als Einscherhinweis H auch extrahiert werden, ob das betreffende Fahrzeug 40, 41 eine Lichthupe LH aktiviert hat.

Kann die Trajektorie T demnach nicht oder nur fehlerhaft ermittelt werden oder ist eine Ermittlung einer Trajektorie T nicht vorgesehen, kann durch den Einscherhinweis H beispielsweise geprüft werden, ob ein Fahrzeug 40 auf der Auffahrt 31 oder der benachbarten Fahrbahn 3a beabsichtigt, auf die Fahrbahn 3 des Fahrzeugverbundes 1 zu wechseln. Damit kann eine fälschlicherweise getroffene Entscheidung anhand von fehlerhaft ermittelten Trajektorien T vermieden werden bzw. ein über die Trajektorie T ermitteltes Eintrittskriterium K plausibilisiert werden.

Weiterhin kann im Rahmen der Prüfung, ob das Eintrittskriterium K erfüllt ist, auch das Vorhandensein einer Auffahrt 31 oder der Ausfahrt 32 ausschlaggebend sein, was ebenfalls aus den Umgebungsdaten UD hergeleitet werden kann. Somit kann festgelegt werden, dass tatsächlich nur dann ein Spurwechsel für einscherbereite Fahrzeug 40, 41 ermöglicht wird, wenn der Fahrzeugverbund 1 mit hoher Wahrscheinlichkeit ein Hindernis für die spurwechselnden Fahrzeuge 40, 41 darstellt. Dadurch kann vermieden werden, dass sich Fahrzeuge 40, 41 unberechtigt und dauerhaft zwischen die Teil-Fahrzeugverbünde 1.k setzen.

Erst wenn das Fahrzeug 40, 41 die Fahrbahn 3 des Fahrzeugverbundes 1 wieder verlassen hat, was ebenfalls über die Umgebungserfassungssysteme 6i, 60 erfasst und aus den Umgebungsdaten UD vom Leitfahrzeug Z ermittelt wird, werden die beiden Teil-Fahrzeugverbünde 1.k koordiniert vom Leitfahrzeug Z wieder aneinander angenähert, indem dem Führungsfahrzeug X.k, k>1 des jeweiligen Folge-Teil-Fahrzeugverbundes 1.k, k>1 als Soll-Abstand dSollj wieder der Verbund-Folgeabstand dF vorgegeben wird und der Fahrzeugverbund 1 wie ursprünglich seine Fahrt fortsetzt. Dazu werden das Führungsfahrzeug X.k, k>1 des jeweiligen Folge-Teil-Fahrzeugverbundes 1.k, k>1 sowie alle weiteren Fahrzeuge 2i, die dahinter folgen, über die Abstandsregelsysteme 5 wieder aufeinander abgestimmt beschleunigt, um die koordinierte Fahrt fortzusetzen.

Grundsätzlich ist es mit dem beschriebenen Verfahren auch möglich, dass der Soll-Abstand dSollj bzw. der Eintrittsabstand dE für das Führungsfahrzeug X.k, k>1 des jeweiligen Folge-Teil-Fahrzeugverbundes 1.k, k>1 derartig festgelegt wird, dass mehr als ein Fahrzeug 40, 41 in den Zwischenraum R einscheren kann. Dies kann beispielsweise dann sinnvoll sein, wenn sich zwei unmittelbar hintereinander auffahrende Fahrzeuge 40 in der Fahrsituation gemäß Fig. 2a oder sich zwei abfahrbereite Fahrzeuge 41 in der Fahrsituation gemäß Fig. 2b befinden, für die jeweils das Eintrittskriterium K erfüllt ist. Dabei ist allerdings abzuwägen, für welche Anzahl an einscherbereiten Fahrzeugen 40, 41 es sinnvoll ist, einen Zwischenraum R auszubilden, ohne dabei den weiteren Verkehr zu stören und/oder die Möglichkeit einer Abstimmung des Fahrzeugverbundes 1 zu verlieren

Weiterhin kann der Zwischenraum R zwischen den Teil-Fahrzeugverbünden 1.k auch für andere, kurzzeitige Einschervorgänge zur Verfügung stehen, in denen ein anderes Fahrzeug einen Spurwechsel "durch" den Fahrzeugverbund 1 beabsichtigt. Für alle genannten Einschervorgänge gilt dabei, dass das jeweilige einscherbereite Fahrzeug 40, 41 nicht mit dem Fahrzeugverbund 1 kommuniziert, um den Spurwechsel mit diesem abzustimmen. Somit wird keine Anforderung vom jeweiligen einscherbereiten Fahrzeug 40, 41 ausgegeben, aufgrund dessen die Fahrzeuge 2i des Fahrzeugverbundes 1 reagieren können oder könnten.

Falls in allen genannten Ausführungen ein oder mehrere einscherbereite Fahrzeuge 40, 41 für einen längeren Zeitraum in dem Zwischenraum R verbleiben, kann vorgesehen sein, dass der Soll-Abstand dSollj ausgehend vom Eintrittsabstand dE für das jeweilige Führungsfahrzeug X.k weiter erhöht wird. Dadurch kann ein dauerhaft sicherer Fahrbetrieb auch dann gewährleistet werden, wenn ein im Fahrzeugverbund 1 fahrendes Fahrzeug 40, 41 nicht mit diesem über die V2X-Kommuikation 9 kommuniziert.

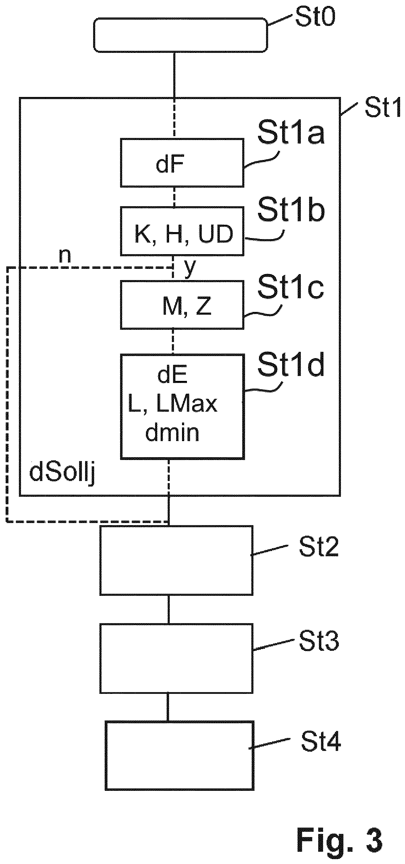

Gemäß Figur 3 kann das erfindungsgemäße Verfahren beispielsweise wie folgt durchgeführt werden:
In einem anfänglichen Schritt St0 findet eine Initialisierung statt, beispielweise mit dem Zusammenstellen des Fahrzeugverbundes 1. In einem anschließenden ersten Schritt St1 werden die Soll-Abstände dSollj zwischen den einzelnen Fahrzeugen 2i des Fahrzeugverbundes 1 koordiniert festgelegt. Dabei wird für jedes Fahrzeug 2i des Fahrzeugverbundes 1 zunächst der Verbund-Folgeabstand dF als Soll-Abstand dSollj festgelegt (St1a). Anschließend wird in Abhängigkeit der Umgebungsdaten UD ein Eintrittskriterium K geprüft, das angibt, ob sich in der Umgebung ein einscherbereites Objekt bzw. Fahrzeug befindet. Dazu können ergänzend auch Einscherhinweise H geprüft werden (St1b).

Ist das Eintrittskriterium K nicht erfüllt, werden die Verbund-Folgeabstände dF im Schritt St2 und St3 entsprechend eingestellt. Ist das Eintrittskriterium K erfüllt, d.h. wird ein einscherbereites Fahrzeug 40, 41 erkannt, wird der Fahrzeugverbund 1 in eine Anzahl M von Teil-Fahrzeugzügen 1.k unterteilt, so dass einem Führungs-Teil-Fahrzeugverbund 1.1 mindestens ein Folge-Teil-Fahrzeugverbund 1.k, k>1 folgt, wobei dazu Führungsfahrzeuge X.k, k>1 für jeden Folge-Teil-Fahrzeugverbund 1.k, k>1 festgelegt werden (St1c). Dies erfolgt beispielsweise in Abhängigkeit davon, in welchem Auftreffpunkt Z, d.h. bei welchem Fahrzeug 2.i, die prädizierte Trajektorie T des einscherbereiten Fahrzeuges 40, 41 auf den Fahrzeugverbund 1 trifft. Folgt daraus, dass der Auftreffpunkt Z im Fahrzeugverbund 1 derartig weit vorn oder hinten liegt, dass das einscherbereite Fahrzeug 40, 41 den Fahrzeugverbund 1 in sicherheitsunkritischer Weise auch vorn bzw. hinten überholen kann, so kann die Unterteilung auch abgebrochen werden.

Dem festgelegten Führungsfahrzeug X.k, k>1 des jeweiligen Folge-Teil-Fahrzeugverbundes 1.k, k>1 wird anschließend als Soll-Abstand dSollj ein Eintritts-Abstand dE vorgegeben, der größer ist als der Verbund-Folgeabstand dF (St1d). Der Eintrittsabstand dE wird entweder in Abhängigkeit einer Maximallänge LMax eines üblichen Fahrzeuges 40, 41 festgelegt oder in Abhängigkeit der tatsächlichen Fahrzeuglänge L des einscherbereiten Fahrzeuges 40, 41, die aus den Umgebungsdaten UD ermittelt wird, variabel eingestellt, wobei in beiden Fällen ein Mindestabstand dmin nach vorn und hinten berücksichtigt wird. Anschließend werden die festgelegten SollAbstände dSollj in einem zweiten Schritt St2 an die jeweiligen Fahrzeuge 2i im Fahrzeugverbund 1 über die V2X-Kommunikation 9 übertragen und in einem dritten Schritt St3 über das Abstandsregelsystem 5 im jeweiligen Fahrzeug 2i umgesetzt.

Nachdem das eingescherte Fahrzeug 40, 41 den Zwischenraum R wieder verlassen hat, kann in einem vierten Schritt St4 ein Zusammenführen der Teil-Fahrzeugverbünde 1.k stattfinden, wobei dazu der Soll-Abstand dSollj des Führungsfahrzeuges X.k, k>1 des jeweiligen Folge-Teil-Fahrzeugverbundes 1.k, k>1 wieder auf den ursprünglichen Verbund-Folgeabstand dF festgelegt wird. Die Teilung in mehrere Teil-Fahrzeugverbünde 1.k kann fortlaufend erfolgen, um beispielsweise bei jeder Auffahrt 31 oder Ausfahrt 32 entsprechend reagieren zu können.

### Bezugszeichenliste (Teil der Beschreibung)

- 1: Fahrzeugverbund
- 1.k: k. Teil-Fahrzeugverbund
- 1.1: Führungs-Teil-Fahrzeugverbund
- 1.k, k>1: Folge-Teil-Fahrzeugverbund
- 2i: i. Fahrzeug im Fahrzeugverbund 1
- 3: Fahrbahn des Fahrzeugverbundes 1
- 3a: benachbarte Fahrbahn
- 4: mehrspurige Straße
- 5: Abstandsregelsystem
- 6i: internes Umgebungserfassungssystem im i. Fahrzeug 2i
- 7: Bremssystem
- 8: Antriebssystem
- 9: drahtlose Kommunikation
- 10: V2X-Einheit
- 30: Auffahrt-Bereich
- 31: Auffahrt
- 32: Ausfahrt
- 40: auffahrendes Fahrzeug (einscherbereites Fahrzeug)
- 41: abfahrbereites Fahrzeug (einscherbereites Fahrzeug)
- 50: Infrastruktureinrichtung
- 60: externes Umgebungserfassungssystem z.B. in der Infrastruktureinrichtung 50
- 70: Auswerteeinheit

- B: Blinker
- dB: Abstandsbetrag
- dE: Eintritts-Abstand
- dF: Verbund-Folgeabstand
- dlstj: Ist-Abstand vor dem i. Fahrzeug mit j = i - 1
- dmin: Mindestabstand
- dSollj: Soll-Abstand vor dem i. Fahrzeug mit j = i - 1
- E: Eintrittsbedingungen
- H: Einscherhinweis
- i, j, k: Index
- K: Eintrittskriterium
- L: Fahrzeuglänge
- LMax: Maximallänge
- LH: Lichthupe
- M: Anzahl an Teil-Fahrzeugverbünden 1.k
- N: Anzahl an Fahrzeugen 2i
- NMax: Maximalanzahl an Fahrzeugen 2i in einem Teil-Fahrzeugverbund
- R: Zwischenraum
- T: Trajektorie
- U: Umgebung
- UD: Umgebungsdaten
- v1: Verbundgeschwindigkeit
- v2: Einscher-Geschwindigkeit
- Z: Auftreffpunkt
- X.k: Führungsfahrzeug des k. Teil-Fahrzeugverbundes
- Z: Leitfahrzeug
- St1, St1a, St1b, St1c, St1d, StT, St2, St3, St3: Schritte des Verfahrens

## Patentansprüche

1. Verfahren zum Koordinieren eines Fahrzeugverbundes (1) aus einer Anzahl (N) an Fahrzeugen (2i, i=1,2,..,N), wobei sich die Fahrzeuge (2i) des Fahrzeugverbundes (1) in vorgegebenen Soll-Abständen (dSollj; j=1, 2, ...N-1) zueinander auf einer Fahrbahn (3) bewegen (St1) und die Fahrzeuge (2i) über eine V2X-Kommunikation (9) untereinander drahtlos kommunizieren, wobei der vorgegebene Soll-Abstand (dSollj) vom jeweiligen Fahrzeug (2i) über ein Abstandsregelsystem (5) eingestellt wird, wobei die Soll-Abstände (dSollj) derartig festgelegt werden, dass der Fahrzeugverbund (1) zumindest zeitweise in eine Anzahl (M) von mindestens zwei Teil-Fahrzeugverbünden (1.k, k=1, 2,...,M) unterteilt ist (St1c), wobei dazu zwischen den Teil-Fahrzeugverbünden (1.k) zumindest zeitweise ein Eintrittsabstand (dE) derartig eingestellt wird (St1d), dass sich zwischen den jeweiligen Teil-Fahrzeugverbünden (1.k) ein Zwischenraum (R) ausbildet, in den mindestens ein einscherbereites Fahrzeug (40, 41) mit einer Fahrzeuglänge (L) wechseln kann, und zwischen den Fahrzeugen (2i) innerhalb eines Teil-Fahrzeugverbundes (1.k) ein Verbund-Folgeabstand (dF) eingestellt wird, der geringer ist als der Eintrittsabstand (dE), wobei in Abhängigkeit von Umgebungsdaten (UD) ein Eintrittskriterium (K) geprüft wird, wobei der Fahrzeugverbund (1) bei Erfüllen des Eintrittskriteriums (K) in mindestens zwei Teil-Fahrzeugverbünde (1.k) unterteilt wird, indem mindestens einem Fahrzeug (2i) des Fahrzeugverbundes (1), dem ein Fahrzeug (2i) desselben Fahrzeugverbundes (1) vorausfährt, als Soll-Abstand (dSollj) der Eintrittsabstand (dE) vorgegeben wird zum Ausbilden des Zwischenraumes (R), **dadurch gekennzeichnet, dass**
das Eintrittskriterium (K) angibt, ob sich in einer Umgebung (U) um den Fahrzeugverbund (1) mindestens ein einscherbereites Fahrzeug (40, 41) befindet, das beabsichtigt, im Bereich des Fahrzeugverbundes (1) in eine Fahrspur (3) des Fahrzeugverbundes (1) zu wechseln (St1b), und als Eintrittskriterium (K) weiterhin geprüft wird, ob eine aus den Umgebungsdaten (UD) folgende prädizierte Trajektorie (T) eines sich in der Umgebung (U) befindlichen Fahrzeuges (40, 41) einen Auftreffpunkt (Z) auf den Fahrzeugverbund (1) aufweist, um festzustellen, ob sich in der Umgebung (U) ein einscherbereites Fahrzeug (40, 41) befindet, das beabsichtigt, im Bereich des Fahrzeugverbundes (1) in die Fahrspur (3) des Fahrzeugverbundes (1) zu wechseln, wobei das Fahrzeug (2i) des Fahrzeugverbundes (1), dem als SollAbstand (dSollj) der Eintrittsabstand (dE) vorgegeben wird, in Abhängigkeit des Auftreffpunktes (Z) derartig ausgewählt wird, dass das der prädizierten Trajektorie (T) folgende einscherbereite Fahrzeug (40, 41) seine Einscher-Geschwindigkeit (v2) beim Einscheren in den Zwischenraum (R) in etwa beibehalten kann.

2. Verfahren nach Anspruch 1, **dadurch gekennzeichnet, dass** die Umgebungsdaten (UD) die Umgebung (U) um den Fahrzeugverbund (1) charakterisieren.

3. Verfahren nach Anspruch 2, **dadurch gekennzeichnet, dass** die Umgebungsdaten (UD) von mindestens einem Umgebungserfassungssystem (6i, 60) ausgegeben werden, wobei das jeweilige Umgebungserfassungssystem (6i, 60) eine Umgebung (U) um den Fahrzeugverbund (1) überwacht, wobei die Umgebungsdaten (UD) über die V2X-Kommunikation (9) zwischen den Fahrzeugen (2i) des Fahrzeugverbundes (1) und/oder zwischen den Fahrzeugen (2i) und einer Infrastruktureinrichtung (50) abseits des Fahrzeugverbbundes (1), die ein externes Umgebungserfassungssystem (60) aufweist, übertragen werden.

4. Verfahren nach Anspruch 2 oder 3, **dadurch gekennzeichnet, dass** die Umgebungsdaten (UD) unterschiedlicher Umgebungserfassungssysteme (6i, 60) fusioniert werden.

5. Verfahren nach einem der vorherigen Ansprüche, **dadurch gekennzeichnet, dass** zum Prüfen des Eintrittskriteriums (K) Einscherhinweise (H) berücksichtigt werden, wobei als Einscherhinweise (H) das Aktivieren eines Blinkers (B) und/oder einer Lichthupe (LH) eines Fahrzeuges (40, 41) in der Umgebung (U) berücksichtigt werden, die anzeigen, ob das Fahrzeug (40, 41) in der Umgebung (U) im Bereich des Fahrzeugverbundes (1) auf die Fahrspur (3) des Fahrzeugverbundes (1) wechseln möchte.

6. Verfahren nach einem der vorhergehenden Ansprüche, **dadurch gekennzeichnet, dass** das Eintrittskriterium (K) lediglich dann geprüft wird und/oder bei Erfüllen des Eintrittskriteriums (K) dem jeweiligen Fahrzeug (2i) lediglich dann der Eintrittsabstand (dE) als Soll-Abstand (dSollj) vorgegeben wird, wenn sich der Fahrzeugverbund (1) einer Auffahrt (31) und/oder einer Ausfahrt (32) nähert, so dass das Unterteilen in mindestens zwei Teil-Fahrzeugverbünde (1.k) lediglich dann erfolgt, wenn sich der Fahrzeugverbund (1) einer Auffahrt (31) und/oder einer Ausfahrt (32) nähert.

7. Verfahren nach Anspruch 6, **dadurch gekennzeichnet, dass** das Vorhandensein einer Auffahrt (31) und/oder einer Ausfahrt (32) aus den Umgebungsdaten (UD) folgt.

8. Verfahren nach einem der vorhergehenden Ansprüche, **dadurch gekennzeichnet, dass** im Rahmen der Unterteilung des Fahrzeugverbundes (1) in mindestens zwei Teil-Fahrzeugverbünde (1.k) durch Vorgabe und Einstellung des Eintrittsabstandes (dE) als Soll-Abstand (dSollj) im Fahrzeug (2i) nicht mit einem einscherbereiten Fahrzeug (40, 41) über die V2X-Kommunikation (9) kommuniziert wird.

9. Verfahren nach einem der vorherigen Ansprüche, **dadurch gekennzeichnet, dass** bei Erfüllen des Eintrittskriteriums (K) ein Fahrzeug (2i) des Fahrzeugverbundes (1) als Führungsfahrzeug (X.k, k>1) eines Folge-Teil-Fahrzeugverbundes (1.k, k>1) ausgewählt wird, wobei diesem ausgewählten Führungsfahrzeug (X.k, k>1) des jeweiligen Folge-Teil-Fahrzeugverbundes (1.k, k>1) als Soll-Abstand (dSollj) der Eintritts-Abstand (dE) vorgegeben wird, so dass einem Führungs-Teil-Fahrzeugverbund (1.1) mindestens ein von dem ausgewählten Führungsfahrzeug (X.k, k>1) angeführter Folge-Teil-Fahrzeugverbund (1.k, k>1) in dem Eintrittsabstand (dE) folgt.

10. Verfahren nach einem der vorhergehenden Ansprüche, **dadurch gekennzeichnet, dass** der Eintrittsabstand (dE) derartig festgelegt wird, dass sich nach Einstellen des Eintrittsabstandes (dE) als Soll-Abstand (dSollj) ein Zwischenraum (R) zwischen den dadurch ausgebildeten Teil-Fahrzeugverbünden (1.k) ausbildet, so dass ein einscherbereites Fahrzeug (40, 41) mit einer Fahrzeuglänge (L), die eine vorab festgelegte Maximallänge (LMax) nicht überschreitet, zwischen den mindestens zwei Teil-Fahrzeugverbünden (1.k) auf die Fahrbahn (3) des Fahrzeugverbundes (1) in den Zwischenraum (R) wechseln kann.

11. Verfahren nach Anspruch 10, **dadurch gekennzeichnet, dass** die Maximallänge (LMax) zwischen 5m und 10m, vorzugsweise 6m, beträgt.

12. Verfahren nach einem der Ansprüche 1 bis 9, **dadurch gekennzeichnet, dass** der Eintrittsabstand (dE) in Abhängigkeit der Fahrzeuglänge (L) des einscherbereiten Fahrzeuges (40, 41) festgelegt wird, wobei die Fahrzeuglänge (L) aus den Umgebungsdaten (UD) abgeleitet wird.

13. Verfahren nach einem der vorhergehenden Ansprüche, **dadurch gekennzeichnet, dass** der Eintrittsabstand (dE) in Abhängigkeit eines Mindest-Abstandes (dmin) festgelegt wird, der vor und nach dem einscherbereiten Fahrzeug (40, 41) der Fahrzeuglänge (L) oder der Maximallänge (LMax) eingehalten wird, wobei der Mindest-Abstand (dmin) zwischen 10m und 25m liegt.

14. Verfahren nach Anspruch einem der vorhergehenden Ansprüche, **dadurch gekennzeichnet, dass** der Eintrittsabstand (dE) unter der Bedingung festgelegt wird, dass Fahrzeuge (2i) unterschiedlicher Teil-Fahrzeugverbünde (1.k) nach Einstellen des Eintrittsabstandes (dE) weiterhin über die V2X-Kommunikation (9) drahtlos miteinander mittelbar oder unmittelbar kommunizieren können zum fortlaufenden Abstimmen des gesamten Fahrzeugverbundes (1).

15. Verfahren nach einem der vorhergehenden Ansprüche, **dadurch gekennzeichnet, dass** zwischen allen Fahrzeugen (2i) des Fahrzeugverbundes (1) bei Nichterfüllen des Eintrittskriteriums (K) der Verbund-Folgeabstand (dF) eingestellt wird, wobei der Verbund-Folgeabstand (dF) in Abhängigkeit von fahrdynamischen Eigenschaften der Fahrzeuge (2i) des Fahrzeugverbundes (1) eingestellt wird, wobei der Verbund-Folgeabstand (dF) weniger als 25 Meter, insbesondere weniger als 15 Meter, beträgt.

16. Verfahren nach einem der vorhergehenden Ansprüche, **dadurch gekennzeichnet, dass** nach einem Erfassen, dass das einscherbereite Fahrzeug (40, 41) sich aus dem Zwischenraum (R) wieder entfernt hat, zwischen allen Fahrzeugen (2i) der Verbund-Folgeabstand (dF) eingestellt wird.

17. Verfahren nach einem der vorhergehenden Ansprüche, **dadurch gekennzeichnet, dass** das einscherbereite Fahrzeug (40, 41) ein auffahrendes Fahrzeug (40) ist, das beabsichtigt, von einer Auffahrt (31) auf die Fahrbahn (3) des Fahrzeugverbundes (1) zu wechseln, oder ein abfahrbereites Fahrzeug (41) ist, das beabsichtigt, von einer benachbarten Fahrbahn (3a) über die Fahrbahn (3) des Fahrzeugverbundes (1) auf eine Ausfahrt (32) zu wechseln.

18. Auswerteeinheit (70) zum Durchführen des Verfahrens nach einem der vorhergehenden Ansprüche, wobei die Auswerteeinheit (70) ausgebildet ist, die Soll-Abstände (dSollj) zwischen Fahrzeugen (2i) eines Fahrzeugverbundes (1) derartig festzulegen, dass der Fahrzeugverbund (1) zumindest zeitweise in eine Anzahl (M) von mindestens zwei Teil-Fahrzeugverbünden (1.k, k=1, 2,...,M) unterteilt ist, wobei die Auswerteeinheit (70) dazu zwischen den Teil-Fahrzeugverbünden (1.k) zumindest zweitweise einen Eintrittsabstand (dE) derartig einstellen kann, dass sich zwischen den jeweiligen Teil-Fahrzeugverbünden (1.k) ein Zwischenraum (R) ausbildet, in den mindestens ein einscherbereites Fahrzeug (40, 41) mit einer Fahrzeuglänge (L) wechseln kann, und zwischen den Fahrzeugen (2i) innerhalb eines Teil-Fahrzeugverbundes (1.k) ein Verbund-Folgeabstand (dF) einstellen kann, der geringer ist als der Eintrittsabstand (dE),wobei die Auswerteeinheit (70) weiterhin in Abhängigkeit von Umgebungsdaten (UD) ein Eintrittskriterium (K) prüfen kann, wobei der Fahrzeugverbund (1) bei Erfüllen des Eintrittskriteriums (K) in mindestens zwei Teil-Fahrzeugverbünde (1.k) unterteilt werden kann, indem mindestens einem Fahrzeug (2i) des Fahrzeugverbundes (1), dem ein Fahrzeug (2i) desselben Fahrzeugverbundes (1) vorausfährt, als Soll-Abstand (dSollj) der Eintrittsabstand (dE) vorgegeben werden kann zum Ausbilden des Zwischenraumes (R), **dadurch gekennzeichnet, dass**
das Eintrittskriterium (K) angibt, ob sich in einer Umgebung (U) um den Fahrzeugverbund (1) mindestens ein einscherbereites Fahrzeug (40, 41) befindet, das beabsichtigt, im Bereich des Fahrzeugverbundes (1) in eine Fahrspur (3) des Fahrzeugverbundes (1) zu wechseln, wobei das Eintrittskriterium (K) weiterhin angibt, ob eine aus den Umgebungsdaten (UD) folgende prädizierte Trajektorie (T) eines sich in der Umgebung (U) befindlichen Fahrzeuges (40, 41) einen Auftreffpunkt (Z) auf den Fahrzeugverbund (1) aufweist, um festzustellen, ob sich in der Umgebung (U) ein einscherbereites Fahrzeug (40, 41) befindet, das beabsichtigt, im Bereich des Fahrzeugverbundes (1) in die Fahrspur (3) des Fahrzeugverbundes (1) zu wechseln, wobei das Fahrzeug (2i) des Fahrzeugverbundes (1), dem als Soll-Abstand (dSollj) der Eintrittsabstand (dE) vorgebbar ist, in Abhängigkeit des Auftreffpunktes (Z) derartig auswählbar ist, dass das der prädizierten Trajektorie (T) folgende einscherbereite Fahrzeug (40, 41) seine Einscher-Geschwindigkeit (v2) beim Einscheren in den Zwischenraum (R) in etwa beibehalten kann.

19. Fahrzeug (2i), insbesondere Leitfahrzeug (Z) eines Fahrzeugverbundes (1), mit einer Auswerteeinheit (70) nach Anspruch 18.

20. Fahrzeugverbund (1) aus mehreren Fahrzeugen (2i), wobei zumindest eines der Fahrzeuge (2i) als Leitfahrzeug (Z) eine Auswerteeinheit (70) nach Anspruch 18 aufweist und das Leitfahrzeug (Z) mit den Fahrzeugen (2i) des Fahrzeugverbundes (1) über eine V2X-Kommunikation (9) drahtlos kommunizieren kann, wobei die Fahrzeuge (2i) jeweils ein Abstandsregelsystem (5) aufweisen, wobei das Abstandsregelsystem (5) jeweils ausgebildet ist, den vom Leitfahrzeug (Z) über die Auswerteinheit (70) vorgegebenen und über die V2X-Kommunikation (9) übertragenen Soll-Abstand (dSollj) einzustellen zum zumindest zweitweisen Unterteilen des Fahrzeugverbundes (1) in mindestens zwei Teilfahrzeug-Verbünde (1.k).

## Claims

1. Method for coordinating a vehicle group (1) composed of a number (N) of vehicles (2i, i=1,2,..,N), the vehicles (2i) of the vehicle group (1) moving (St1) on a roadway (3) at predetermined target distances (dSollj; j=1, 2, ...N-1) from one another and the vehicles (2i) communicating with one another wirelessly via V2X communication (9), the predetermined target distance (dSollj) from the corresponding vehicle (2i) being adjusted via a distance control system (5), the target distances (dSollj) being defined such that the vehicle group (1) is divided (St1c) at least temporarily into a number (M) of at least two vehicle sub-groups (1.k, k=1, 2,...,M), an entry distance (dE) being adjusted (St1d) for this purpose at least temporarily between the vehicle sub-groups (1.k) such that a gap (R) forms between the corresponding vehicle sub-groups (1.k), into which gap at least one vehicle (40, 41) which has a vehicle length (L) and is ready to cut in can switch, and a group following distance (dF) being adjusted between the vehicles (2i) within a vehicle sub-group (1.k), which group following distance is smaller than the entry distance (dE), an entry criterion (K) being checked on the basis of the surroundings data (UD), the vehicle group (1) being divided into at least two vehicle sub-groups (1.k) when the entry criterion (K) is fulfilled, by at least one vehicle (2i) of the vehicle group (1), ahead of which a vehicle (2i) of the same vehicle group (1) is traveling, being specified as the target distance (dSollj) of the entry distance (dE) in order to form the gap (R),
**characterized in that**
the entry criterion (K) indicates whether at least one vehicle (40, 41) which is ready to cut in is located in the surroundings (U) around the vehicle group (1), which vehicle, in the region of the vehicle group (1), intends to switch (St1b) into a lane (3) of the vehicle group (1), and it is also checked as an entry criterion (K) whether a predicted trajectory (T), derived from the surroundings data (UD), of a vehicle (40, 41) located in the surroundings (U) has a point of impact (Z) on the vehicle group (1), in order to determine whether a vehicle (40, 41) which is ready to cut in is located in the surroundings (U), which vehicle, in the region of the vehicle group (1), intends to switch into the lane (3) of the vehicle group (1), the vehicle (2i) of the vehicle group (1), to which vehicle the entry distance (DE) is specified as the target distance (dSollj), being selected on the basis of the point of impact (Z) such that the vehicle (40, 41), which is following the predicted trajectory (T) and is ready to cut in, is able to approximately maintain its cutting-in speed (v2) when cutting into the gap (R).

2. Method according to claim 1, **characterized in that** the surroundings data (UD) characterize the surroundings (U) around the vehicle group (1).

3. Method according to claim 2, **characterized in that** the surroundings data (UD) are output by at least one surroundings-detection system (6i, 60), the corresponding surroundings-detection system (6i, 60) monitoring the surroundings (U) around the vehicle group (1), the surroundings data (UD) being transmitted via the V2X communication (9) between the vehicles (2i) of the vehicle group (1) and/or between the vehicles (2i) and an infrastructure device (50) remote from the vehicle group (1), which infrastructure device has an external surroundings-detection system (60).

4. Method according to claim 2 or 3, **characterized in that** the surroundings data (UD) of different surroundings-detection systems (6i, 60) are fused.

5. Method according to any of the preceding claims, **characterized in that** for checking the entry criterion (K), cutting-in indications (H) are taken into account, the activation of a turn signal (B) and/or a headlamp flasher (LH) of a vehicle (40, 41) in the surroundings (U) being taken into account as cutting-in instructions (H), which indicate whether the vehicle (40, 41), in the surroundings (U) in the region of the vehicle group (1), wishes to switch to the lane (3) of the vehicle group (1).

6. Method according to any of the preceding claims, **characterized in that** the entry criterion (K) is checked, and/or when the entry criterion (K) is fulfilled, the entry distance (dE) is specified to the corresponding vehicle (2i) as the target distance (dSollj), only when the vehicle group (1) approaches an entry ramp (31) and/or an exit ramp (32), so that the division into at least two vehicle sub-groups (1.k) takes place only when the vehicle group (1) approaches an entry ramp (31) and/or an exit ramp (32).

7. Method according to claim 6, **characterized in that** the presence of an entry ramp (31) and/or an exit ramp (32) is derived from the surroundings data (UD).

8. Method according to any of the preceding claims, **characterized in that,** as part of the division of the vehicle group (1) into at least two vehicle sub-groups (1.k), by specifying and adjusting the entry distance (dE) as the target distance (dSollj) in the vehicle (2i), no communication takes place via the V2X communication (9) with a vehicle (40, 41) which is ready to cut in.

9. Method according to any of the preceding claims, **characterized in that,** when the entry criterion (K) is fulfilled, one vehicle (2i) of the vehicle group (1) is selected as a guide vehicle (X.k, k>1) of a following vehicle sub-group (1.k, k>1), the entry distance (dE) being specified to this selected guide vehicle (X.k, k>1) of the corresponding following vehicle sub-group (1.k, k>1) as a target distance (dSollj), so that a guide sub-vehicle group (1.1) follows at least one following vehicle sub-group (1.k, k>1) led by the selected guide vehicle (X.k, k>1) at the entry distance (dE).

10. Method according to any of the preceding claims, **characterized in that** the entry distance (dE) is defined such that, after the entry distance (dE) has been adjusted as the target distance (dSollj), a gap (R) forms between the vehicle sub-groups (1.k) formed thereby, so that a vehicle (40, 41) which is ready to cut in and has a vehicle length (L) which does not exceed a predefined maximum length (LMax) can switch into the intermediate space (R) to the roadway (3) of the vehicle group (1), between the at least two vehicle sub-groups (1.k).

11. Method according to claim 10, **characterized in that** the maximum length (LMax) is between 5 m and 10 m, preferably 6 m.

12. Method according to any of claims 1 to 9, **characterized in that** the entry distance (dE) is defined on the basis of the vehicle length (L) of the vehicle (40, 41) which is ready to cut in, the vehicle length (L) being derived from the surroundings data (UD).

13. Method according to any of the preceding claims, **characterized in that** the entry distance (dE) is defined on the basis of a minimum distance (dmin) which is maintained in front of and behind the vehicle (40, 41) which is ready to cut in and has the vehicle length (L) or the maximum length (LMax), the minimum distance (dmin) being between 10 m and 25 m.

14. Method according to any of the preceding claims, **characterized in that** the entry distance (dE) is defined under the condition whereby vehicles (2i) of different vehicle sub-groups (1.k) can also communicate wirelessly indirectly or directly with one another via the V2X communication (9) after the entry distance (dE) has been adjusted in order to continuously coordinate the entire vehicle group (1).

15. Method according to any of the preceding claims, **characterized in that** the group following distance (dF) is adjusted between all vehicles (2i) of the vehicle group (1) when the entry criterion (K) is not fulfilled, the group following distance (dF) being adjusted on the basis of driving dynamic properties of the vehicles (2i) of the vehicle group (1), the group following distance (dF) being less than 25 meters, in particular less than 15 meters.

16. Method according to any of the preceding claims, **characterized in that,** after detecting that the vehicle (40, 41) that is ready to cut in has exited the gap (R) again, the group following distance (dF) is adjusted between all vehicles (2i).

17. Method according to any of the preceding claims, **characterized in that** the vehicle (40, 41) that is ready to cut in is a joining vehicle (40) which intends to switch from an entry ramp (31) to the roadway (3) of the vehicle group (1), or is a vehicle (41) which is ready to leave and intends to switch from an adjacent roadway (3a) to an exit ramp (32) via the roadway (3) of the vehicle group (1).

18. Evaluation unit (70) for carrying out the method according to any of the preceding claims, the evaluation unit (70) being designed to define the target distances (dSollj) between vehicles (2i) of a vehicle group (1) such that the vehicle group (1) is divided at least temporarily into a number (M) of at least two vehicle sub-groups (1.k, k=1, 2,...,M), it being possible, for this purpose, for the evaluation unit (70) to at least temporarily adjust an entry distance (dE) between the vehicle sub-groups (1.k) such that a gap (R) is formed between the corresponding vehicle sub-groups (1.k), into which gap at least one vehicle (40, 41) which is ready to cut in and has a vehicle length (L) is able to switch, and to adjust a group following distance (dF) between the vehicles (2i) within a vehicle sub-group (1.k), which group following distance is smaller than the entry distance (dE),it also being possible for the evaluation unit (70) to check an entry criterion (K) on the basis of surroundings data (UD), it being possible for the vehicle group (1) to be divided into at least two vehicle sub-groups (1.k) when the entry criterion (K) is fulfilled, by it being possible for at least one vehicle (2i) of the vehicle group (1), ahead of which a vehicle (2i) of the same vehicle group (1) is traveling, to be specified as the target distance (dSollj) of the entry distance (dE) in order to form the gap (R),
**characterized in that**
the entry criterion (K) indicates whether at least one vehicle (40, 41) which is ready to cut in is located in the surroundings (U) around the vehicle group (1), which vehicle, in the region of the vehicle group (1), intends to switch into a lane (3) of the vehicle group (1), the entry criterion (K) also indicating whether a predicted trajectory (T), derived from the surroundings data (UD), of a vehicle (40, 41) located in the surroundings (U) has a point of impact (Z) on the vehicle group (1), in order to determine whether a vehicle (40, 41) which is ready to cut in is located in the surroundings (U), which vehicle intends to switch, in the region of the vehicle group (1), into the lane (3) of the vehicle group (1), the vehicle (2i) of the vehicle group (1), to which vehicle the entry distance (dE) can be specified as the target distance (dSollj), being selected on the basis of the point of impact (Z) such that the vehicle (40, 41), which is following the predicted trajectory (T) and is ready to cut in, is able to approximately maintain its cutting-in speed (v2) when cutting into the gap (R).

19. Vehicle (2i), in particular a lead vehicle (Z) of a vehicle group (1), comprising an evaluation unit (70) according to claim 18.

20. Vehicle group (1) composed of a plurality of vehicles (2i), wherein at least one of the vehicles (2i) as a lead vehicle (Z) has an evaluation unit (70) according to claim 18, and the lead vehicle (Z) can communicate wirelessly with the vehicles (2i) of the vehicle group (1) via V2X communication (9), wherein the vehicles (2i) each have a distance control system (5), wherein the distance control system (5) is designed in each case to adjust the target distance (dSollj) specified by the lead vehicle (Z) via the evaluation unit (70) and transmitted via the V2X communication (9) in order to divide the vehicle group (1) at least temporarily into at least two vehicle sub-groups (1.k).

## Revendications

1. Procédé permettant de coordonner un convoi de véhicules (1) constitué d'un certain nombre (N) de véhicules (2i, i=1,2,..,N), dans lequel les véhicules (2i) du convoi de véhicules (1) se déplacent les uns par rapport aux autres sur une chaussée (3) à des distances de consigne (dSollj ; j=1, 2,...N-1) prédéfinies (St1) et les véhicules (2i) communiquent entre eux sans fil par l'intermédiaire d'une communication V2X (9), dans lequel la distance de consigne (dSollj) prédéfinie par rapport au véhicule (2i) respectif est réglée par l'intermédiaire d'un système de régulation de distance (5), dans lequel les distances de consigne (dSollj) sont déterminées de telle sorte que le convoi de véhicules (1) est divisé au moins temporairement en un nombre (M) d'au moins deux convois de véhicules partiels (1.k, k=1, 2,...,M) (St1c), dans lequel une distance d'entrée (dE) est réglée au moins temporairement entre les convois de véhicules partiels (1.k) (St1d) de telle sorte qu'un espace intermédiaire (R) se forme entre les convois de véhicules partiels (1.k) respectifs, dans lequel espace intermédiaire au moins un véhicule (40, 41) prêt à s'insérer comportant une longueur de véhicule (L) peut passer, et une distance de suivi de convoi (dF) inférieure à la distance d'entrée (dE) est réglée entre les véhicules (2i) à l'intérieur d'un convoi de véhicules partiel (1.k), dans lequel un critère d'entrée (K) est vérifié en fonction de données de zone environnante (UD), dans lequel, lorsque le critère d'entrée (K) est rempli, le convoi de véhicules (1) est divisé en au moins deux convois de véhicules partiels (1.k) par le fait que la distance d'entrée (dE) est prédéfinie comme distance de consigne (dSollj) pour au moins un véhicule (2i) du convoi de véhicules (1) précédé par un véhicule (2i) du même convoi de véhicules (1) afin de former l'espace intermédiaire (R),
**caractérisé en ce que**
le critère d'entrée (K) indique si au moins un véhicule (40, 41) prêt à s'insérer se trouve dans une zone environnante (U) autour du convoi de véhicules (1), lequel véhicule a l'intention de passer dans une voie de circulation (3) du convoi de véhicules (1) dans la zone du convoi de véhicules (1) (St1b) et, comme critère d'entrée (K), on vérifie en outre si une trajectoire prédite (T) résultant des données de zone environnante (UD) d'un véhicule (40, 41) se trouvant dans la zone environnante (U) présente un point de rencontre (Z) sur le convoi de véhicules (1), afin de déterminer si un véhicule (40, 41) prêt à s'insérer se trouve dans la zone environnante (U), lequel véhicule a l'intention de passer dans la voie de circulation (3) du convoi de véhicules (1) dans la zone du convoi de véhicules (1), dans lequel le véhicule (2i) du convoi de véhicules (1) pour lequel la distance d'entrée (dE) est prédéfinie comme distance de consigne (dSollj) est sélectionné en fonction du point de rencontre (Z) de telle sorte que le véhicule (40, 41) prêt à s'insérer suivant la trajectoire prédite (T) peut maintenir approximativement sa vitesse d'insertion (v2) lors de l'insertion dans l'espace intermédiaire (R).

2. Procédé selon la revendication 1, **caractérisé en ce que** les données de zone environnante (UD) caractérisent la zone environnante (U) autour du convoi de véhicules (1).

3. Procédé selon la revendication 2, **caractérisé en ce que** les données de zone environnante (UD) sont délivrées en sortie par au moins un système de détection de zone environnante (6i, 60), dans lequel le système de détection de zone environnante (6i, 60) respectif surveille une zone environnante (U) autour du convoi de véhicules (1), dans lequel les données de zone environnante (UD) sont transmises, par l'intermédiaire de la communication V2X (9), entre les véhicules (2i) du convoi de véhicules (1) et/ou entre les véhicules (2i) et un dispositif d'infrastructure (50) à l'écart du convoi de véhicules (1) qui présente un système de détection de zone environnante (60) externe.

4. Procédé selon la revendication 2 ou 3, **caractérisé en ce que** les données de zone environnante (UD) de différents systèmes de détection de zone environnante (6i, 60) sont fusionnées.

5. Procédé selon l'une des revendications précédentes, **caractérisé en ce que,** pour la vérification du critère d'entrée (K), des indications d'insertion (H) sont prises en compte, dans lequel, en tant qu'indication d'insertion (H), l'activation d'un clignotant (B) et/ou d'un avertisseur lumineux (LH) d'un véhicule (40, 41) dans la zone environnante (U) est prise en compte, laquelle activation indique si le véhicule (40, 41) dans la zone environnante (U) souhaite passer sur la voie de circulation (3) du convoi de véhicules (1) dans la zone du convoi de véhicules (1).

6. Procédé selon l'une des revendications précédentes, **caractérisé en ce que** le critère d'entrée (K) n'est vérifié et/ou, si le critère d'entrée (K) est rempli, la distance d'entrée (dE) n'est prédéfinie comme distance de consigne (dSollj) pour le véhicule (2i) respectif que lorsque le convoi de véhicules (1) s'approche d'une entrée (31) et/ou d'une sortie (32), de sorte que la division en au moins deux convois de véhicules partiels (1.k) n'est effectuée que lorsque le convoi de véhicules (1) s'approche d'une entrée (31) et/ou d'une sortie (32).

7. Procédé selon la revendication 6, **caractérisé en ce que** la présence d'une entrée (31) et/ou d'une sortie (32) résulte des données de zone environnante (UD).

8. Procédé selon l'une des revendications précédentes,
**caractérisé en ce que,** dans le cadre de la division du convoi de véhicules (1) en au moins deux convois de véhicules partiels (1.k), en prédéfinissant et en réglant la distance d'entrée (dE) comme distance de consigne (dSollj) dans le véhicule (2i), il n'y pas de communication par l'intermédiaire de la communication V2X (9) avec un véhicule (40, 41) prêt à s'insérer.

9. Procédé selon l'une des revendications précédentes,
**caractérisé en ce que,** lorsque le critère d'entrée (K) est rempli, un véhicule (2i) du convoi de véhicules (1) est sélectionné comme véhicule de guidage (X.k, k>1) d'un convoi de véhicules partiel suiveur (1.k, k>1), dans lequel la distance d'entrée (dE) est prédéfinie comme distance de consigne (dSollj) pour ledit véhicule de guidage (X.k, k>1) sélectionné du convoi de véhicules partiel suiveur (1.k, k>1) respectif, de sorte qu'au moins un convoi de véhicules partiel suiveur (1.k, k>1) guidé par le véhicule de guidage (X.k, k>1) sélectionné suit un convoi de véhicules partiel de guidage (1.1) à la distance d'entrée (dE).

10. Procédé selon l'une des revendications précédentes, **caractérisé en ce que** la distance d'entrée (dE) est déterminée de telle sorte que, après le réglage de la distance d'entrée (dE) comme distance de consigne (dSollj), un espace intermédiaire (R) se forme entre les convois de véhicules partiels (1.k) ainsi réalisés, de sorte qu'un véhicule (40, 41) prêt à s'insérer comportant une longueur de véhicule (L) ne dépassant pas une longueur maximale (LMax) préalablement déterminée peut passer dans l'espace intermédiaire (R) entre les au moins deux convois de véhicules partiels (1.k) sur la chaussée (3) du convoi de véhicules (1).

11. Procédé selon la revendication 10, **caractérisé en ce que** la longueur maximale (LMax) est comprise entre 5 m et 10 m, de préférence est de 6 m.

12. Procédé selon l'une des revendications 1 à 9, **caractérisé en ce que** la distance d'entrée (dE) est déterminée en fonction de la longueur de véhicule (L) du véhicule (40, 41) prêt à s'insérer, dans lequel la longueur de véhicule (L) est dérivée à partir des données de zone environnante (UD).

13. Procédé selon l'une des revendications précédentes,
**caractérisé en ce que** la distance d'entrée (dE) est déterminée en fonction d'une distance minimale (dmin) qui est respectée avant et après le véhicule (40, 41) prêt à s'insérer de la longueur de véhicule (L) ou de la longueur maximale (Lmax), dans lequel la distance minimale (dmin) est comprise entre 10 m et 25 m.

14. Procédé selon l'une des revendications précédentes,
**caractérisé en ce que** la distance d'entrée (dE) est déterminée à condition que des véhicules (2i) de différents convois de véhicules partiels (1.k) puissent en outre communiquer sans fil directement ou indirectement entre eux par l'intermédiaire de la communication V2X (9) après le réglage de la distance d'entrée (dE), afin de coordonner en continu l'ensemble du convoi de véhicules (1).

15. Procédé selon l'une des revendications précédentes, **caractérisé en ce que,** en cas de non-remplissage du critère d'entrée (K), la distance de suivi de convoi (dF) est réglée entre tous les véhicules (2i) du convoi de véhicules (1), dans lequel la distance de suivi de convoi (dF) est réglée en fonction de propriétés dynamiques de conduite des véhicules (2i) du convoi de véhicules (1), dans lequel la distance de suivi de convoi (dF) est inférieure à 25 mètres, en particulier inférieure à 15 mètres.

16. Procédé selon l'une des revendications précédentes,
**caractérisé en ce que,** après la détection selon laquelle le véhicule (40, 41) prêt à s'insérer s'est éloigné de l'espace intermédiaire (R), la distance de suivi de convoi (dF) est réglée entre tous les véhicules (2i).

17. Procédé selon l'une des revendications précédentes, **caractérisé en ce que** le véhicule (40, 41) prêt à s'insérer est un véhicule (40) entrant qui a l'intention de passer d'une entrée (31) à la chaussée (3) du convoi de véhicules (1), ou est un véhicule (41) prêt à sortir qui a l'intention de passer d'une chaussée voisine (3a) à une sortie (32) par l'intermédiaire de la chaussée (3) du convoi de véhicules (1).

18. Unité d'évaluation (70) pour la mise en oeuvre du procédé selon l'une des revendications précédentes, dans laquelle l'unité d'évaluation (70) est configurée pour déterminer les distances de consigne (dSollj) entre des véhicules (2i) d'un convoi de véhicules (1) de telle sorte que le convoi de véhicules (1) est divisé au moins temporairement en un nombre (M) d'au moins deux convois de véhicules partiels (1.k, k=1, 2,..., M), dans laquelle l'unité d'évaluation (70) peut régler au moins temporairement une distance d'entrée (dE) entre les convois de véhicules partiels (1.k) de telle sorte qu'un espace intermédiaire (R) se forme entre les convois de véhicules partiels (1.k) respectifs, dans lequel espace intermédiaire au moins un véhicule (40, 41) prêt à s'insérer comportant une longueur de véhicule (L) peut passer, et peut régler une distance de suivi de convoi (dF), laquelle est inférieure à la distance d'entrée (dE), entre les véhicules (2i) à l'intérieur d'un convoi de véhicules partiels (1.k), dans laquelle l'unité d'évaluation (70) peut en outre vérifier un critère d'entrée (K) en fonction de données de zone environnante (UD), dans laquelle le convoi de véhicules (1) peut être divisé en au moins deux convois de véhicules partiels (1.k) lorsque le critère d'entrée (K) est rempli par le fait que la distance d'entrée (dE) peut être prédéfinie comme distance de consigne (dSollj) pour au moins un véhicule (2i) du convoi de véhicules (1) précédé par un véhicule (2i) du même convoi de véhicules (1) afin de former l'espace intermédiaire (R),
**caractérisée en ce que**
le critère d'entrée (K) indique si au moins un véhicule (40, 41) prêt à s'insérer se trouve dans une zone environnante (U) autour du convoi de véhicules (1), lequel véhicule a l'intention de passer dans une voie de circulation (3) du convoi de véhicules (1) dans la zone du convoi de véhicules (1), dans laquelle le critère d'entrée (K) indique en outre si une trajectoire prédite (T) résultant des données de zone environnante (UD) d'un véhicule (40, 41) se trouvant dans la zone environnante (U) présente un point de rencontre (Z) sur le convoi de véhicules (1), afin de déterminer si un véhicule (40, 41) prêt à s'insérer se trouve dans la zone environnante (U), lequel véhicule a l'intention de passer dans la voie de circulation (3) du convoi de véhicules (1) dans la zone du convoi de véhicules (1), dans laquelle le véhicule (2i) du convoi de véhicules (1) pour lequel la distance d'entrée (dE) peut être prédéfinie comme distance de consigne (dSollj) peut être sélectionné en fonction du point de rencontre (Z) de telle sorte que le véhicule (40, 41) prêt à s'insérer suivant la trajectoire prédite (T) peut maintenir approximativement sa vitesse d'insertion (v2) lors de l'insertion dans l'espace intermédiaire (R).

19. Véhicule (2i), en particulier véhicule de tête (Z) d'un convoi de véhicules (1), comportant une unité d'évaluation (70) selon la revendication 18.

20. Convoi de véhicules (1) composé de plusieurs véhicules (2i), dans lequel au moins l'un des véhicules (2i) présente, en tant que véhicule de tête (Z), une unité d'évaluation (70) selon la revendication 18 et le véhicule de tête (Z) peut communiquer sans fil avec les véhicules (2i) du convoi de véhicules (1) par l'intermédiaire d'une communication V2X (9), dans lequel les véhicules (2i) présentent respectivement un système de régulation de distance (5), dans lequel le système de régulation de distance (5) est respectivement configuré pour régler la distance de consigne (dSollj) prédéfinie par le véhicule de tête (Z) par l'intermédiaire de l'unité d'évaluation (70) et transmise par l'intermédiaire de la communication V2X (9) afin de diviser au moins temporairement le convoi de véhicules (1) en au moins deux convois de véhicules partiels (1.k).
